# EUROPÄISCHE PATENTSCHRIFT

(11) **EP 2 669 324 B1**
(45) Veröffentlichungstag und Bekanntmachung des Hinweises auf die Patenterteilung: **12.07.2017**
(21) Anmeldenummer: 13169878.9
(22) Anmeldetag: 30.05.2013
(51) Int. Cl.: C08K 3/00, C09K 3/10, C08L 23/14, C08K 5/3492, C08K 5/521, C08K 3/32

(54) **Herstellung eines dämmschichtbildenden Baustoffes auf Basis eines PP Elastomeres**
Production of an insulating layer building material based on a PP elastomer
Fabrication d'un matériau de construction formant une couche isolante à base d'un élastomère PP

(30) Priorität: 31.05.2012 DE 102012209163
(43) Veröffentlichungstag der Anmeldung: 04.12.2013
(73) Patentinhaber: Doyma GmbH & Co, 28876 Oyten (DE)
(72) Erfinder: Meirose, Nils, 28816 Stuhr (DE); Frackmann, Gernot, Dr., 21449 Radbruch (DE)
(74) Vertreter: Eisenführ Speiser

(56) Entgegenhaltungen:
- EP-A1- 1 207 183
- EP-A1- 2 088 183
- WO-A1-2004/099309
- WO-A1-2011/079457
- WO-A2-2005/101976
- US-A1- 2009 087 648
- US-A1- 2010 174 036
- US-B1- 6 444 736

## Beschreibung

Die vorliegende Erfindung betrifft thermoplastische Elastomer-Zusammensetzungen auf Basis eines thermoplastischen Polypropylen-basierten Elastomers, die sich zur Herstellung von dämmschichtbildenden Baustoffen oder Baustoffartikeln, insbesondere für den vorbeugenden Brandschutz, eignen. Die Erfindung betrifft auch die unter Verwendung der erfindungsgemäßen thermoplastischen Elastomer-Zusammensetzungen hergestellten dämmschichtbildenden Baustoffe bzw. Baustoffartikel. Derartige dämmschichtbildende Baustoffe sind insbesondere Brandschutzmischungen oder intumeszierende Baustoffartikel wie z.B. Dichtungen, Manschetten oder Wickelbänder für den vorbeugenden Brandschutz, die solche Brandschutzmischungen enthalten.

Um eine bestimmte Brandschutzklassifizierung für die in einem Bauwerk angebrachten Baueinheiten zu erzielen, setzt man an kritischen Stellen die sogenannten intumeszierenden Materialien ein.

Intumeszierende Materialien zeichnen sich dadurch aus, dass sie ab einer bestimmten Temperatur, welche in der Regel zwischen 200 und 350 °C liegt, beginnen zu expandieren. Durch die Expansion vergrößert sich das Volumen der intumeszierenden Materialien um ein Vielfaches, wobei eventuell vorhandene Hohlräume, durch die Feuer oder Rauch treten könnte, abgedichtet werden. Weiterhin wird durch die Abdichtung verhindert, dass zusätzliche Luft an den Brandherd gelangt und so ein weiteres Ausdehnen des Brandherdes verhindert. Normalerweise haben solche intumeszierenden Materialien, anders als flammhemmend ausgerüstete Kunststoffteile, außerhalb eines Brandfalles keine Funktion. Im Brandfall allerdings übernehmen sie die wichtige Funktion Hohlräume, Spalten und Fugen, welche sich an den unterschiedlichsten Stellen eines Gebäudeabschnittes befinden können, abzudichten. Der größte Anteil von intumeszierenden Dichtungen wird als Dichtungsstreifen in Gebäuden verarbeitet.

Eine Brandschutzmischung bzw. ein damit hergestellter intumeszierender Brandschutzartikel umfassen üblicherweise jeweils ein Matrixmaterial, in welches ein intumeszierender Blähgraphit, ein oder mehrere Treibmittel wie z.B. ein oder mehrere verkapselte Stickstoff-abspaltende und/oder Kohlendioxid-abspaltende Treibmittel, ein oder mehrere ausgewählte Flammschutzmittel, sowie gegebenenfalls sonstige Bestandteile oder Additive (Zusatzstoffe) eingebettet sind.

Die Erfindung betrifft weiterhin intumeszierende Brandschutzartikel, die eine Rohrabschottung für brennbare Rohre oder einen Bestandteil einer solchen Rohrabschottung, oder eine Kabelabschottung oder einen Bestandteil einer solchen Kabelabschottung bilden. Die Rohrabschottung kann in Form von Dichtungsmassen, Dichtungen, Manschetten oder Wickelbändern ausgebildet sein.

In einem weiteren Aspekt betrifft die vorliegende Erfindung die Verwendung einer erfindungsgemäßen Brandschutzmischung zur Herstellung eines (vorzugsweise erfindungsgemäßen) intumeszierenden Brandschutzartikels.

Ferner betrifft die vorliegende Erfindung ein entsprechendes Verfahren zur Herstellung einer erfindungsgemäßen Brandschutzmischung zur Herstellung eines (vorzugsweise erfindungsgemäßen) intumeszierenden Brandschutzartikels, sowie ein Verfahren zur Abschottung von brennbaren Rohren oder von Kabeln.

Durchbrüche, Durchführungen (z.B. für Kabelstränge oder Rohre) sowie sonstige Öffnungen in Wänden, Böden und/oder Decken von Gebäuden müssen zum Zwecke des Brandschutzes mit Brandschutz-Abdichtungen versehen werden, um zu verhindern, dass im Brandfall das Feuer und der Rauch sich durch diese Öffnungen in andere Gebäudeteile ausbreiten können. Üblicherweise enthalten diese Brandschutz-Abdichtungen aufschäumende Materialien bzw. bestehen aus solchen und können in Form von härtenden, formlosen Brandschutzmassen oder in Form von vorgefertigten Streifen(Streifendichtung, Dichtungsstreifen), Platten, Steinen und dergleichen eingesetzt werden, die in die abzudichtenden Öffnungen eingebracht werden oder diese in Form einer Abdeckung vor dem Mauerwerk abschließen.

Für solche Brandschutz-Abdichtungen verwendete aufschäumende Materialien enthalten üblicherweise als intumeszierendes Brandschutzadditiv eine oder mehrere expandierbare Graphit-Interkalationsverbindungen, die auch als intumeszierender Blähgraphit bekannt und im Handel erhältlich sind. Der Begriff "intumeszierend" ist eine Bezeichnung aus dem Brandschutz und bezeichnet eine Wirkungsweise besonderer Materialien, die im Brandfall aufschäumen, d.h. thermisch expandierbar sind, und eine vollständige oder zumindest teilweise isolierende Schutzschicht (z.B. in Form eines Hartschaums) bilden.

Expandierbare Graphit-Interkalationsverbindungen sind Verbindungen, bei denen kleine Fremdmoleküle zwischen den Gitterschichten des Graphits eingelagert (interkaliert) wurden. Solche Verbindungen werden üblicherweise hergestellt, indem gereinigter Naturgraphit in einer Lösung dispergiert wird, die ein Oxidationsmittel und eine starke Säure enthält. Durch die dabei stattfindende Oxidation entstehen in den Schichtgittern wasserunlösliche Salze sowie flüchtige Bestandteile, die dann auch für die Expansion im Brandfall verantwortlich sind. Beschreibungen entsprechender Herstellungsverfahren finden sich beispielsweise in EP 0 085 121 und US 4,091,083.

Durch die Wahl der eingesetzten Säure und des Oxidationsmittels lassen sich die späteren Eigenschaften der expandierbaren Graphite wie folgt teilweise einstellen:
So ergibt die Verwendung von Schwefelsäure beispielsweise intumeszierende Blähgraphite mit einem thermisch bedingten Expansionsbeginn bei etwa 200 °C. Die Temperatur, bei der die thermisch bedingte Expansion beginnt, wird dabei als Onset-Temperatur bezeichnet. Der Einsatz von Salpetersäure oder Essigsäure dagegen führt zu einer Onset-Temperatur des intumeszierenden Blähgraphits im Bereich von etwa 150 bis 160 °C. Dabei ist der Einsatz von Essigsäure gegenüber dem Einsatz von Salpetersäure vorzuziehen, da bei Blähgraphiten, die Salpetersäure enthalten, im Brandfall nitrose Gase bzw. Stickoxide entstehen können.

Die verwendeten Oxidationsmittel haben hauptsächlich Einfluss auf das Expansionsvolumen, den Expansionsdruck sowie die Höhe der Expansion bei bestimmten Temperaturen. In der Vergangenheit wurde Kaliumdichromat als besonders starkes Oxidationsmittel eingesetzt. Da diese Verbindung jedoch hochgradig krebserregend ist, wird sie beispielsweise in Europa und Nordamerika nicht mehr eingesetzt. Auch der Einsatz von Kaliumchromat als Oxidationsmittel ist nicht mehr üblich. Wasserstoffperoxid und Kaliumpermanganat sind aus umweltschutz- und sicherheitstechnischer Sicht unbedenklicher und werden daher bevorzugt als Oxidationsmittel verwendet.

Sobald ein entsprechender Blähgraphit auf eine Temperatur gleich oder oberhalb der Onset-Temperatur erhitzt wird, breitet sich der Blähgraphit auf ein Volumen im Bereich von weniger als das 10-fache bis zu mehr als das 400-fache des ursprünglichen Volumens aus. Die Expansion wird dadurch verursacht, dass die in der Schichtgitterstruktur des Graphits eingelagerten Interkalate durch dieses Erhitzen unter Bildung gasförmiger Stoffe zersetzt werden, wodurch die Graphitpartikel senkrecht zu der Schichtebene expandiert werden (vergleiche hierzu EP 0 085 121).

Diese Volumenzunahme macht man sich in intumeszierenden Massen zunutze, die beispielsweise zur Brandschutzabdichtung von Rohrdurchführungen durch Wände und Decken von Gebäuden eingesetzt werden. Im Brandfall führt dann ein Erreichen der Onset-Temperatur zu einer Ausdehnung der enthaltenen Graphitteilchen und damit der gesamten die Durchführung abdichtenden intumeszierenden Masse. Dadurch kann auch nach dem Abbrennen der durch die Durchführung geführten Rohre ein Durchbruch des Feuers durch diese Durchführung verhindert bzw. zumindest verzögert werden.

Um beispielsweise einen Ringspalt brandschutzgemäß abzudichten, können entsprechende Brandschutz-Abdichtungen um das durch die Wand hindurchgeführte Rohr in die Öffnung eingeführt oder in Form einer Abdeckung auf der Wand angebracht werden. Problematisch ist dabei jedoch, dass im Falle des Einbringens einer Brandschutzabdichtung als Rohrabschottung in den verbleibenden Ringspalt der Wärmeeintrag im Brandfall über eine kleine Oberfläche erfolgt. Da die gewünschte Expansion des intumeszierenden Brandschutzadditivs in der Brandschutzmasse von diesem Wärmeeintrag abhängt, kann dies zur Folge haben, dass das abzudichtende Rohr kollabiert, bevor die Onset-Temperatur der intumeszierenden Brandschutzmasse erreicht ist. In diesem Falle wird ein Durchschlagen des Feuers und des Rauchs durch die Öffnung möglich. Dies kann insbesondere bei herkömmlichen intumeszierenden Brandschutz-Abdichtungen vorkommen, welche Blähgraphite als intumeszierendes Brandschutzadditiv enthalten, da deren Expansionsverhalten gerade für diesen Anwendungsfall oft nicht befriedigend ist.

Charakteristische Kenngrößen für das Expansionsverhalten intumeszierender Materialien, insbesondere eines Blähgraphits, sind beispielsweise:
- als wichtigste Kenngröße die Onset-Temperatur des intumeszierenden Materials, d.h. für einen Blähgraphit die Temperatur, bei der die thermisch bedingte Expansion der Graphitpartikel des Blähgraphits beginnt;
- die Expansionsgeschwindigkeit des intumeszierenden Materials im Bereich der Onset-Temperatur [% / °C], welche die Ausdehnung des Materials in Prozent pro Grad Temperaturerhöhung angibt;
- das maximal erzielbare Expansionsvolumen [% / mg], welches die Ausdehnung des Materials (%) normiert auf die eingewogene Materialmenge (mg⁻¹) angibt;
- die Temperatur, bei der 100 % des maximal erzielbaren Expansionsvolumens erreicht werden (T₁₀₀),
- der mittlere Ausdehnungskoeffizient α [K⁻¹] zwischen der Onset-Temperatur und der T₁₀₀, definiert als α = L₀⁻¹ · ΔL · ΔT⁻¹, worin ΔL für die durch die Temperaturänderung ΔT hervorgerufene Längenänderung und L₀ für die Ausgangslänge einer Probe des intumeszierenden Materials steht. Die Längenänderung der Probe ist ein zur Ausdehnung des intumeszierenden Materials äquivalenter Messparameter und wird gemäß thermomechanischer Analyse (TMA) bestimmt (vgl. hierzu EP 1 489 136 A1).

Die genannten Kenngrößen, insbesondere die Expansionsgeschwindigkeit im Bereich der Onset-Temperatur [% / °C], das maximal erzielbare Expansionsvolumen [% / mg], die T₁₀₀ sowie der mittlere Ausdehnungskoeffizient α leiten sich beispielsweise aus der Methode der thermomechanischen Analyse ab (siehe hierzu beispielsweise EP 1 489 136 A1). Eine weitere charakteristische Kenngröße zur Beschreibung des Expansionsverhaltens intumeszierender Materialien, insbesondere eines Blähgraphits, ist die maximale freie Expansion. Die maximale freie Expansion [ml / g] beschreibt die Volumenzunahme des thermisch expandierenden Materials bzw. eines intumeszierenden Blähgraphits bezogen auf die eingesetzte Materialmenge in Gramm.

Gemäß dem Stand der Technik werden überwiegend kommerziell erhältliche Graphitpartikel (Blähgraphite) als intumeszierende Brandschutzadditive in entsprechenden intumeszierenden Brandschutz-Abdichtungen eingesetzt, die, wie bereits weiter oben beschrieben, Schwefelsäure, Salpetersäure oder Essigsäure enthalten und somit eine Onset-Temperatur von etwa 200 °C bzw. im Bereich von 150 bis 160 °C besitzen. Im Hinblick auf das erzielbare Expansionsvolumen und die Expansionsgeschwindigkeit im Bereich der Onset-Temperatur vermögen diese Blähgraphite jedoch nicht zu befriedigen.

So kann es vorkommen, dass beim Einsatz solcher üblicher Blähgraphite und beim Einbringen der entsprechenden Brandschutz-Abdichtung in das Innere der zu verschließenden Öffnungen die Expansionsparameter dieser Blähgraphite nicht ausreichen, um bei einem (wie oben beschrieben) entsprechend geringen Wärmeeintrag die Intumeszenz der Brandschutz-Abdichtung bzw. der entsprechenden Mischung schnell genug auszulösen und ein ausreichend großes Expansionsvolumen zu erreichen, um die Brandschutz-Abdichtung auch beim Kollabieren eines durch die Öffnung hindurch geführten Rohres sicherzustellen (vergleiche hierzu EP 1 489 136 A1).

In EP 1 489 136 A1 sind Brandschutzuntersuchungen veröffentlicht, die zeigen, dass die als intumeszierendes Brandschutzadditiv verwendeten Blähgraphite (bei einer Teilchengröße von 250 bis 400 µm) für den Einsatz in entsprechenden Brandschutz-Abdichtungen vorzugsweise folgende Expansionsparameter aufweisen sollten, um eine effiziente Rohrabdichtung zu gewährleisten:

| | |
|---|---|
| Onset-Temperatur [°C]: | ≤ 160 |
| Volumen bzgl. Einwaage, | |
| d.h. maximal erzielbares Expansionsvolumen [% / mg]: | ≥ 550 |
| Expansionsgeschwindigkeit im Bereich der Onset-Temperatur [% / °C]: | ≥ 20 |
| Mittlerer Ausdehnungskoeffizient α | zwischen |
| Onset-Temperatur und T₁₀₀ [1 / K]: | ≥ 0,1 |

Die Messung dieser Expansionseigenschaften erfolgt gemäß EP 1 489 136 A1 mit Hilfe der thermomechanischen Analyse.

In EP 1 489 136 A1 wird zudem beschrieben, dass eine entsprechende Einstellung dieser bevorzugten Expansionsparameter über die Teilchengröße der Graphitpartikel ungeeignet sei. Größere Graphitpartikel besitzen zwar ein entsprechend höheres Expansionsvolumen, jedoch ergibt sich bei der Herstellung der intumeszierenden Brandschutz-Abdichtung augenscheinlich die Problematik, dass die größeren Partikel durch die auftretenden Scherkräfte beim Einbringen der Brandschutzadditive in die Polymermatrices durch Mischprozesse im Vergleich zu kleineren Graphitpartikeln leichter geschädigt und abgebaut werden können.

Die Folgen sind üblicherweise ein Zerbrechen der Graphitpartikel mit einer damit einhergehenden Korrosion an Maschinen und Werkzeugen durch die aus den Blähgraphitpartikeln freigesetzte Säure, eine unerwünschte Reaktion der freigesetzten Säure mit anderen Formulierungsbestandteilen sowie eine Beeinträchtigung des Expansionsverhaltens.

In EP 1 489 136 A1 wird ein Lösungsansatz beschrieben, um die genannten Probleme zu umgehen. Dadurch sollen sich die Onset-Temperatur der Graphit-Interkalationsverbindungen reduzieren und das Expansionsvolumen und die Expansionsgeschwindigkeit im Bereich der Onset-Temperatur steigern lassen. Dies sei zu erreichen, indem bei der Herstellung der Blähgraphite Metallhalogenide und ein Nitroalkan der allgemeinen Formel CH₃(CH₂)ₙNO₂, vorzugsweise Nitromethan, zusätzlich zur entsprechenden Säure ein- bzw. angelagert werden.

Es ergeben sich im Zusammenhang mit diesem Lösungsansatz jedoch Probleme. Die Modifizierung des Blähgraphits durch Metallhalogenide ist unter umwelttechnischen Aspekten für eine entsprechende Produktion nicht geeignet, da bei der Herstellung eines solchen modifizierten Graphits unter Verwendung von Metallhalogeniden mehr als die doppelte Menge an schwermetallhaltigen Halogeniden pro Tonne Naturgraphit benötigt werden würde. Der Einsatz von Nitroalkanen der allgemeinen Formel CH₃(CH₂)ₙNO₂ ist aufgrund ihrer brandfördernden Eigenschaften für eine Modifizierung von Blähgraphiten, die in entsprechenden Brandschutz-Abdichtungen eingesetzt werden sollen, nachteilig.

Die EP 2 088 183 A1 versucht die Nachteile des Standes der Technik zu beheben, indem sie (a) eine Brandschutzmischung zur Herstellung eines intumeszierenden Brandschutzartikels sowie (b) einen intumeszierenden Brandschutzartikel, vorschlägt, wobei die Brandschutzmischung bzw. der Brandschutzartikels jeweils ein Matrixmaterial umfassen, in welches die Bestandteile (i) intumeszierender Blähgraphit, (ii) (A) intumeszierende, alkangefüllte Mikrokapseln bzw. (ii) (B) ein oder mehrere verkapselte Stickstoff-abspaltende und/oder Kohlendioxid-abspaltende Treibmittel, (iii) ein oder mehrere ausgewählte Flammschutzmittel, sowie gegebenenfalls (iv) sonstige Bestandteile eingebettet sind. Gemäß EP 2 088 183 A1 basiert das Matrixmaterial auf einem Polymer oder einem polymerisierbaren Material und enthält vorzugsweise als Polymer mindestens einen Vertreter der natürlichen und synthetischen Kautschuke, Polyurethane, Polyvinylacetate, Polyvinylether, Polyvinylpropionate, Polystyrole, Silikone und/oder Polymethacrylate. Ein besonders bevorzugtes Matrixmaterial gemäß EP 2 088 183 A1 ist eine Polymermatrix aus Polyurethan bestehend aus einem Ein-Komponenten-System (z.B. auf Basis von mit Luftfeuchtigkeit aushärtendem PU-Prepolymer) oder einem Zwei-Komponenten-Gießsystem (z.B. im Prepolymerverfahren oder im sogenannten One-Shot-Verfahren hergestellt). Polyurethane werden üblicherweise durch Polymerisation in wäßrigen Systemen hergestellt und können daher eine Restfeuchte aufweisen. Für den Einsatz von Polyurethanen in Brandschutzmischungen bzw. Brandschutzartikeln ist es daher wichtig, dass Polyurethan-basierte Brandschutzmischungen nur einen niedrigen Wassergehalt von maximal 0,1 Gew.-% bezogen auf das Gesamtgewicht der Brandschutzmischung bzw. des Brandschutzartikels aufweisen.

Während gemäß EP 1 489 136 A1 und DE 101 62 532 C1 eine Verbesserung des Expansionsverhaltens allein über eine Optimierung der Expansionsparameter des eingesetzten Blähgraphits angestrebt wird, verfolgt die EP 2 088 183 A1 einen Ansatz, bei dem sämtliche Parameter des Gesamtsystems, d.h. der gesamten Brandschutzmischung bzw. des gesamten intumeszierenden Brandschutzartikels, für die gewünschte Brandschutz-Anwendung als relevant betrachtet werden, konzentriert sich dabei aber auf die Optimierung Polyurethan-basierter Brandschutzmischungen, bei denen die Expansionsparameter des Gesamtsystems durch die Kombination mindestens zweier unterschiedlicher intumeszierender Additive, wie insbesondere (i) intumeszierender Blähgraphit und (ii) (A) intumeszierende, alkangefüllte Mikrokapseln bzw. (ii) (B) ein oder mehrere verkapselte Stickstoff-abspaltende und/oder Kohlendioxid-abspaltende Treibmittel, erreicht wird; bevorzugt ist dabei die Verwendung intumeszierender, alkangefüllter Mikrokapseln.

Im Stand der Technik werden verschiedene thermoplastische Polymere eingesetzt. So sind die auf einem thermoplastischen Trägermaterial basierenden intumeszierenden Brandschutzmischungen des Standes der Technik oft auf der Grundlage von weichgemachtem PVC hergestellt. PVC hat den Nachteil, dass im Brandfall das sehr korrosive Gas HCl entsteht. Der hohe Anteil an Weichmacher in dem PVC wirkt sich nachteilig aus. Durch Migration des Weichmachers in dem PVC verliert eine Dichtung durch Alterung an Flexibilität. Die abdichtende Wirkung im Brandfall wird deshalb nachteilig beeinflusst. Des Weiteren kann der Weichmacher mit anderen Materialien in der Umgebung der Dichtung in Kontakt bzw. in Wechselwirkung treten und diese nachteilig beeinflussen.

Weitere im Stand der Technik bekannte Polymere zur Herstellung von intumeszierenden Dichtungen sind Ethylen-Vinylacetat-Copolymere mit einem Vinylacetat-Anteil von 50 Gew.-%. Durch den hohen Vinylacetat-Anteil sind hohe Verarbeitungstemperaturen zur Herstellung der Dichtung notwendig. Falls in solchen Dichtungen Weichmacher eingesetzt werden ist die Alterungsstabilität vergleichbar mit Dichtungen auf Basis von weichgemachtem PVC. Die abdichtende Wirkung im Brandfall wird durch die Alterung nachteilig beeinflusst.

In der EP 0 879 870 werden intumeszierende Dichtungs- und Abdeckprofile offenbart. Die Profile werden durch Extrusion einer Mischung aus thermoplastischen Elastomeren, Blähgraphit, Flammhemmer, anorganischen Füllstoffen und anorganischen Fasern bei 180 - 250 °C und anschließender Umformung zu den entsprechenden Profilen hergestellt. Im Beispiel 1 der europäischen Offenlegungsschrift wird eine Mischung aus 50 Gew.-% EVA Levapren TM 500 HV, 25 Gew.-% Blähgraphit, 5 Gew.-% Amgard V 490, 5 Gew.-% Glasfasern und 15 Gew.-% Aluminiumtrihydrat bei 180 - 210 °C in einem Zweischneckenextruder zu Strängen verarbeitet und kalt abgeschlagen. Anschließend wird das erhaltene Zylindergranulat mit einer Spritzgussmaschine zu Dichtungsprofilen umgeformt. Das EVA Copolymer Levapren TM 500 HV wird von der Firma Bayer vertrieben. Es handelt sich hierbei um ein Ethylen-Vinylacetat-Copolymer mit einem Vinylacetat-Anteil von 50 Gew.-%. Da in dem ersten Produktionsschritt in dem Zweischnecken-Extruder 180 - 210 °C vorliegen, ist es notwendig, dass sich der Blähgraphit bei dieser Verarbeitungstemperatur nicht beginnt auszudehnen. Somit muss eine Blähgraphit-Type mit einer hohen Ausdehnungstemperatur verwendet werden, was dann zu einer hohen Ansprechtemperatur der hergestellten Dichtungsprofile im Brandfall führt. Die Dichtungsprofile beginnen sich erst bei relativ hohen Temperaturen im Brandfalle auszudehnen. Dies bewirkt, dass bei einem beginnenden Brand anfänglich Feuer und Rauch durch die mit den Dichtungsprofilen versehenen Hohlräume dringen kann, da anfänglich die Rauchtemperaturen so niedrig sind, dass die Dichtung sich nicht beginnt auszudehnen und somit die Hohlräume nicht versiegelt.

In der EP 1 207 183 wird eine Formmasse zur Herstellung von aufschäumenden Brandschutzformteilen offenbart. In einer bevorzugten Ausführungsform können aus der Formmasse Dichtungen hergestellt werden. Die vorgeschlagene Formmasse enthält 20 - 80 Gew.-% Polymer ausgewählt aus thermoplastischem Elastomer oder thermoplastischem Ethylen-Vinylacetat-Copolymer, 5 - 70 Gew.-% eines phosphorhaltigen Flammschutzmittels, sowie 2 - 70 Gew.-% Blähgraphit. Es wird eine ganze Reihe von thermoplastischen Elastomeren sehr allgemein genannt, wie Acrylat-Kautschuk, Polyester-UrethanKautschuk, Polybutadien-Kautschuk, Ethylen-Acrylat Kautschuk, Ethylen-Propylen-Terpolymer, Ethylen-Propylen-Copolymer, Polyether-Urethankautschuk, Ethylen-Vinylacetat-Copolymer, Styrol-Butadien-Kautschuk; konkret befasst sich die EP 1 207 183 jedoch nur mit Ethylen-Vinylacetat-Copolymer als thermoplastisches Polymer, worin der Vinylacetat-Anteil zwischen 5 und 95 Gew.-% liegt, und wobei ein Vinylacetat-Anteil von 50 Gew-% bevorzugt ist.

Die EP 1 498 463 A1 versucht die vorstehenden Nachteile des Standes der Technik in Bezug auf die thermoplastischen Polymere zu beheben, indem sie ein intumeszierende Dichtungen für den vorbeugenden Brandschutz vorschlägt, die bei möglichst niedrigen Temperaturen beginnen sich auszudehnen, um im Brandfall ein schnelleres Ansprechverhalten und somit eine frühere Abdichtung von Hohlräumen in Gebäuden sicherzustellen. Dieses wird gemäß der EP 1 498 463 A1 erreicht durch eine intumeszierende Dichtung, enthaltend mindestens ein Ethylen-Vinylacetat-Copolymer mit einem Vinylacetat-Anteil von 6 - 40 Gew.-%, mindestens ein phosphorhaltiges Flammschutzmittel und Blähgraphit.

Die WO 2005/101976 A2 betrifft ein flammwidriges Polymer mit Blähgraphit und einem Stickstoff-haltigen Flammschutzmittel, wobei die Zusammensetzungen ausdrücklich "phosphatfreie" Flammschutzmittel sind. Das Polymer kann zwar unter anderem auch ein Propylen-Ethylen-Blockcopolymer sein, es werden jedoch keine Angaben zur konkreten Zusammensetzung etwaig geeigneter Propylen-Ethylen-Blockcopolymer offenbart.

Die DE 199 83 137 B4 offenbart eine flammwidrige Polyolefinzusammensetzung für elektrische Anwendungen umfassend als Zweikomponenten-Basisharz (A) eine Polypropylenzusammensetzung aus 100 Gew.-Teilen einer Komponente (a), die ein, mit einem speziellen voraktivierten Katalysator hergestelltes, Propylenhomopolymerisat oder Propylen-Ethylen-Blockcopolymer mit zumindest 50 Gew.-%, vorzugsweise zumindest 70 Gew.-%, Propylenpolymereinheiten, und aus einer zweiten Komponente (b) von 0,01 bis 2 Gew.-Teilen eines Ethylenhomopolymers oder eines Ethylen-Olefin-Copolymers mit zumindest 50 Gew.-% Ethylenpolymereinheiten und einer bestimmten Eigenviskosität. Hierbei umfasst die flammwidrige Polyolefinzusammensetzung ein zum Basisharz zugegebenes halogenfreies, flammwidriges Mittel (B) aus einer Kombination aus einem Ammoniumpolyphosphat und einem 1,3,5-Triazinderivat. Konkrete Propylen-EthylenCopolymere werden allerdings nicht beschreiben, insbesondere keine Propylen-EthylenCopolymere, d.h. weder Propylen-Ethylen-Blockcopolymere noch Propylen-Ethylen-Mischcopolymersisate, die als Einkomponenten-Basisharz für flammwidrige Polyolefinzusammensetzung geeignet sein könnten.

Die primäre Aufgabe der vorliegenden Erfindung besteht nun darin, neue thermoplastische Elastomer-Zusammensetzungen bereitzustellen, die Nachteile des Standes der Technik überwinden und die in Extrusionsverfahren zur Herstellung von dämmschichtbildenden Baustoffen oder Baustoffartikeln, insbesondere für den vorbeugenden Brandschutz, eingesetzt werden können. Insbesondere ist es Aufgabe der vorliegenden Erfindung, dämmschichtbildende Baustoffe bzw. Baustoffartikel mit intumeszierender Wirkung anzugeben, die sich einerseits bei in Extrusionsverfahren üblichen Temperaturen leicht herstellen lassen und die andererseits bei möglichst niedrigen Temperaturen beginnen, sich auszudehnen, um so im Brandfall ein schnelleres Ansprechverhalten und somit eine frühere Abdichtung von Hohlräumen in Gebäuden sicherzustellen. Eine weitere Aufgabe der Erfindung betrifft die Verwendung solcher extrudierbaren thermoplastischen Elastomer-Zusammensetzungen zur Herstellung von dämmschichtbildenden Baustoffen bzw. Baustoffartikeln sowie entsprechende, derartige extrudierbare thermoplastische Elastomer-Zusammensetzungen umfassende dämmschichtbildende Baustoffe oder Baustoffartikel, insbesondere intumeszierenden Baustoffe wie z.B. Brandschutzmischungen oder entsprechende intumeszierende Baustoffartikel anzugeben, mit denen es im Brandfall gelingt, auch bei niedrigeren Temperaturen und/oder bei ungünstigen Bedingungen der Wärmeübertragung auf die Brandschutzmischung bzw. den intumeszierenden Brandschutzartikel die Abdichtung bzw. den Verschluss einer Öffnung in Wänden, Böden und/oder Decken von Gebäuden auch ohne der im Stand der Technik teils verwendeten bedenklichen Zusätze deutlich zu verbessern.

Vorzugsweise sollen eine Brandschutzmischung bzw. entsprechende intumeszierende Brandschutzartikel angegeben werden, die sich besonders gut zur Abdichtung von Durchführungen für Rohre und/oder Kabel(-stränge) eignen. Vorzugsweise sollen durch die vorliegende Erfindung auch größere Öffnungen, z.B. für dickwandigere Rohre mit großem Rohrquerschnitt, sicher abgedichtet werden.

Des Weiteren sollte mit der vorliegenden Erfindung die Verwendung einer erfindungsgemäßen Brandschutzmischung zur Herstellung eines (vorzugsweise erfindungsgemäßen) intumeszierenden Brandschutzartikels sowie ein entsprechendes Verfahren zur Herstellung einer solchen erfindungsgemäßen Brandschutzmischung angegeben werden.

Zudem sollte ein Verfahren zur Abschottung von brennbaren Rohren bzw. von Kabeln angegeben werden.

Weitere Aufgabenstellungen, die der vorliegenden Erfindung zugrunde liegen, ergeben sich aus den nachfolgenden Ausführungen und den beigefügten Patentansprüchen.

Zur Lösung der Aufgabenstellungen liegt der vorliegenden Erfindung eine Optimierung der Expansionsparameter des Gesamtsystems zugrunde, die durch die Auswahl eines besonders flexiblen Matrixmaterials aus einem Polypropylen-basierten thermoplastischen Elastomer mit definiertem Ethylen-Anteil, erreicht wird, welches hoch mit Feststoffen angereichert werden kann und einen günstigen Einfluss auf die Standfestigkeit eines aufschäumenden Schaumes ausübt. Dieses besonders flexible System der erfindungsgemäßen Polypropylen-basierten thermoplastischen Elastomer-Matrix erlaubt es z.B. hohe Mengen an Blähgraphit und Flammschutzmittel sowie weitere erwünschte feste Zusatzstoffe (Additive) in der Matrix einzubetten, was sich sehr vorteilhaft im Brandfall auswirkt. Als thermoplastische Elastomere im Sinne der Erfindung werden Polymere mit gummielastischem Verhalten verstanden, die bei Raumtemperatur wiederholt gedehnt werden können und nach Aufhebung des für die Dehnung erforderlichen Zwanges sofort wieder annähernd ihre Ausgangslänge annehmen.

Dementsprechend betrifft die vorliegende Erfindung gemäß einem primären Aspekt eine thermoplastische Elastomer-Zusammensetzung umfassend ein Matrixmaterial bestehend aus einem Polypropylen-basierten thermoplastischen Elastomer mit Ethylen-Anteil, wobei das Gewichtsverhältnis von Propylen zu Ethylen im Matrixmaterial im Bereich von 95:5 bis 75:25 beträgt, und jeweils eine im Matrixmaterial eingebettete Menge an Blähgraphit von 20 - 40 Gew.-% bezogen auf die msse der Gesamtzusammensetzung, und eine wirksame Menge mindestens eines, vorzugsweise phosphorhalatigen, Flammschutzmittels, und gegebenenfalls zusätzlich ein oder mehrere weitere im Matrixmaterial eingebettete oder zugemischte in dämmschichtbildenden thermoplastischen Elastomer-Zusammensetzungen übliche Additive. Die erfindungsgemäßen, insbesondere intumeszierenden Zusammensetzungen zeichnen sich allgemein dadurch aus, dass der Ethylen-Anteil im Polypropylen-basierten thermoplastischen Elastomer 5 bis 25 Gew.-% ist. Der Propylen-Anteil im thermoplastischen Elastomer liegt dann bei 95 bis 75 Gew.-%.

Im Matrixmaterial bestehend aus einem Polypropylen-basierten thermoplastischen Elastomer mit Ethylen-Anteil kann der Ethylen-Anteil als monomeres, oligomeres und/oder polymeres Ethylen vorliegen. Der Propylen-Anteil im Matrixmaterial wird vorzugsweise überwiegend als Polypropylen vorliegen, kann jedoch je nach Ethylen-Anteil und/oder Polymertyp vereinzelt auch als oligomeres und/oder gelegentlich als monomeres Propylen vorliegen. Je nach Herstellungsart des Polypropylen-basierten thermoplastischen Elastomers mit Ethylen-Anteil kann das polymere Matrixmaterial ein Mischcopolymerisat und/oder ggf. auch ein Blockcopolymerisat sein. Als Mischcopolymerisate werden im Rahmen der Erfindung Copolymerisate verstanden, in denen die Verteilung des Ethyhlenanteils im Polypropylen vorwiegend zufällig, d.h. statistisch oder gradientenmäßig ist. Als Blockcopolymerisate werden im Rahmen der Erfindung Copolymerisate verstanden, in denen die Verteilung des Ethyhlenanteils eher in Form von längeren Sequenzen oder Blöcken des Ethylens, d.h. als oligomere und/oder polymere Ethylen-Anteile im Polypropylen vorliegt. In bevorzugten Ausgestaltungen der Erfindung ist das Matrixmaterial bestehend aus einem Polypropylen-basierten thermoplastischen Elastomer mit Ethylen-Anteil ein Mischpolymerisat.

Selbstverständlich ist es bevorzugt, dass die Menge an Blähgraphit und die Menge an Flammschutzmittel jeweils so gewählt ist, dass im Sinne der erfindungsgemäß gewünschten Wirkung ein messbarer Einfluss durch den jeweiligen Bestandteil entsteht. So ist bevorzugt, dass bei einer erfindungsgemäßen Mischung die Menge an Blähgraphit ausreicht, dass bei Erhitzung auf die Temperatur des maximal erzielbaren Expansionsvolumens eine Volumenzunahme von wenigstens 10 % erfolgt, verglichen mit dem Volumen der Mischung bei Raumtemperatur. Im Falle der Wirksamkeit des Flammschutzmittels ist es bevorzugt, dass das Flammschutzmittel in einer ausreichenden Menge enthalten ist, um die Flammtemperatur der erfindungsgemäßen Mischung verglichen mit einer Mischung gleicher Zusammensetzung ohne das Flammschutzmittel um wenigstens 1°C, bevorzugt ≥ 5°C, weiter bevorzugt ≥ 10°C heraufzusetzen. Das Flammschutzmittel im vorliegenden Fall eine zusätzliche verkrustende Wirkung, die auch zu einer erhöhten Stabilität des Systems im aufgeschäumten Zustand führt.

In einer Ausführungsform der vorstehenden erfindungsgemäßen Zusammensetzung ist das thermoplastische Elastomer auf Polypropylen-Basis in einer Menge von wenigstens 25 Gew.-%, vorzugsweise wenigstens 30 Gew.-%, jeweils bezogen auf die Masse der Gesamtzusammensetzung, enthalten.

In einer bevorzugten Ausführungsform der vorstehenden erfindungsgemäßen Zusammensetzung ist das thermoplastische Elastomer auf Polypropylen-Basis in einer Menge von 20 - 80 Gew.-%, vorzugsweise in einer Menge von 25 - 50 Gew.-%, weiter bevorzugt in einer Menge von 25 - 40 Gew.-%, besonders bevorzugt in einer Menge von 30 - 40 Gew.-%, jeweils bezogen auf die Masse der Gesamtzusammensetzung enthalten.

In einer weiteren bevorzugten Ausführungsform der vorstehend beschriebenen erfindungsgemäßen Zusammensetzungen zeichnen sich diese dadurch aus, dass der Erweichungspunkt des Polypropylen-basierten thermoplastischen Elastomers ≤ 170 °C ist.

Der Erweichungspunkt (Erweichungstemperatur) des Polypropylen basierten thermoplastische Elastomers ist die Temperatur, bei der das Copolymer von einem glasigen oder hartelastischen Zustand in einen gummielastischen Zustand übergeht. Dieser Übergang ist verbunden mit einer Verminderung der Härte des Copolymeren. Dies zeigt sich dadurch, dass bei Erwärmung ein auf das zu untersuchende Copolymer aufgesetzter Körper nach Erreichen des Erweichungspunktes des Copolymeren, in das Copolymer eindringt. Der Erweichungspunkt lässt sich nach DIN 53460, Dezember 1976, bestimmen. Nach dieser Norm wird die Temperatur ermittelt, bei der ein Stahlstift mit einem kreisförmigen Querschnitt von 1 mm² und einer Länge von mindestens 3 mm unter Aufbringung einer Kraft von 1 kp bzw. 5 kp 1 mm tief senkrecht in das Polymer eindringt.

Das in den Zusammensetzungen der vorliegenden Erfindung verwendete Polypropylen basierte thermoplastische Elastomer hat vorzugsweise einen Erweichungspunkt von ≤ 160 °C, weiter bevorzugt ≤ 140 °C, weiter bevorzugt ≤ 130 °C, noch weiter bevorzugt ≤ 120 °C, und am meisten bevorzugt ≤ 110 °C.

Die vorstehenden erfindungsgemäßen Zusammensetzungen auf Basis von Polypropylen-basierten thermoplastischen Elastomeren mit einem Ethylen-Anteil in den vorstehend angegebenen Mengen eignen sich hervorragend zur Herstellung von dämmschichtbildenden Baustoffen bzw. Baustoffartikeln, die als weitere maßgebliche Zusatzstoffe (Additive) behandeltes Graphit (Blähgraphit) und Flammschutzmittel (Phosphate und andere), sowie gegebenenfalls weitere Additive in eine extrudierbare Matrix aus dem Polypropylen-basierten thermoplastischen Elastomer mit Ethylen-Anteil eingebettet enthalten. Mit den erfindungsgemäßen Zusammensetzungen wurden somit Rezepturen und passende Kunststoffsysteme entwickelt, die für die Herstellung einer Matrix mittels eines Extruder im Bereich der dämmschichtbildenden Baustoffe besonders flexible Systeme darstellen, welche hoch mit Feststoffen angereichert werden können. Das Hochanreichern der Matrix in dämmschichtbildenden Baustoffen mit Feststoffen ist sehr fördernd im Brandfall und das erfindungsgemäß ausgewählte Polypropylen-basierte thermoplastische Elastomer mit einem Ethylen-Anteil übt darüber hinaus einen guten Einfluss auf die Standfestigkeit eines aufschäumenden Schaumes aus.

Besonders vorteilhafte erfindungsgemäße Zusammensetzungen zeichnen sich daher durch eine hohe Gesamtmenge der in das Matrixmaterial eingebetteten Bestandteile von Blähgraphit, Flammschutzmittel und gegebenenfalls weiteren Additiven aus, wobei die Menge 20 - 80 Gew.-%, vorzugsweise 60 - 70 Gew.-%, bezogen auf die Gesamtzusammensetzung als 100 Gew.%, beträgt.

Ein maßgeblicher Bestandteil der erfindungsgemäßen Zusammensetzungen ist Blähgraphit. So können die erfindungsgemäßen Zusammensetzungen das Blähgraphit in einer Menge von 20 - 40 Gew.-%, vorzugsweise von 30 - 40 Gew.-%, weiter bevorzugt von 33 - 37 Gew.-%, bezogen auf die Gesamtzusammensetzung enthalten. In einem Beispiel kann das Blähgraphit in einer Menge von etwa 35 Gew.-% bezogen auf die Gesamtzusammensetzung enthalten sein.

In beispielhaften erfindungsgemäßen Zusammensetzungen ist das Blähgraphit ein Graphit enthaltend Schwefelsäure. Ein solches Blähgraphit kann weiterhin durch wenigstens einen, d.h. einzeln oder in Kombination, der folgenden Parameter charakterisiert sein: Plättchengröße 200 µm - 500 µm; enthaltene Säure: interkalierter Schwefelsäure; Aschegehalt: < 5 %, bevorzugt < 3 %; Graphitgehalt: 95 - 99 %; Expansionsvolumen: 200 - 500 ml/g; pH-Wert: neutral. Ein Blähgraphit mit diesen Eigenschaften ist z.B. ein Blähgraphit mit der Typenbezeichnung AEM C1.

Besonders geeignete und bevorzugte Ausführungsformen der erfindungsgemäßen Zusammensetzungen, z.B. erfindungsgemäße Brandschutzmischungen bzw. erfindungsgemäße Brandschutzartikel, enthalten ein intumeszierendes Blähgraphit, welches eine maximale freie Expansion von 150 bis 500 ml/g, vorzugsweise von 350 bis 450 ml/g, besitzt. In einer weiteren bevorzugten Ausführungsform hat der Blähgraphit bei einer Temperatur von 1000 °C eine Expansion von 20 - 400 ml/g, besonders bevorzugt 200 - 400 ml/g.

Gemäß einer weiteren bevorzugten Ausführungsform der erfindungsgemäßen Zusammensetzungen, z.B. erfindungsgemäße Brandschutzmischungen bzw. erfindungsgemäße Brandschutzartikel, liegt ein intumeszierender Blähgraphit vor, dessen Teilchen eine Größe im Bereich unter 1 mm aufweisen. Die Teilchengröße ist hierbei z.B. der Teilchendurchmesser Die Teilchengrößenbestimmung kann hierbei durch die dem Fachmann geläufigen Methoden zur Bestimmung von Teilchengrößen ermittelt werden. Beispielsweise kann die Teilchengröße durch Siebverfahren unter Verwendung von Sieben mit definierten Maschenweiten ermittelt werden. Hierbei lässt sich auch der prozentuale Anteil (z.B. Gew.-%) bestimmter Teilchengrößen oder Teilchengrößenbereiche ermitteln, indem man z.B. Siebe unterschiedlicher Maschenweite zum Fraktionieren des Teilchengutes verwendet und das jeweilige Gewicht der erhaltenen Siebfraktionen gemessen wird. Der Blähgraphit besitzt eine Teilchengröße in einem bestimmten Bereich unter 1 mm, wie bspw. im Bereich von 150 bis 800 µm, besonders bevorzugt im Bereich von 300 bis 800 µm. Da der Blähgraphit üblicherweise gesiebt wird, um die gewünschte Teilchengröße zu erhalten, liegen im Einzelfall neben den Blähgraphitteilchen bevorzugter Teilchengröße auch Blähgraphitteilchen kleinerer Teilchengröße vor. Vorzugsweise haben 80 % (Gew.) der Teilchen des Blähgraphits eine Teilchengröße von 75 - (800 µm micron), weiter bevorzugt 150 - 800 µm (micron) und am meisten bevorzugt 180 - 800 µm (micron).

Ein erfindungsgemäß einzusetzender intumeszierender Blähgraphit weist zudem vorzugsweise einen, zwei oder sämtliche der folgenden Expansionsparameter auf:
- ein maximal erzielbares Expansionsvolumen von 550 % / mg oder mehr,
- eine Expansionsgeschwindigkeit von 20 % / °C oder mehr im Bereich der Onset-Temperatur
- einen mittleren Ausdehnungskoeffizienten α zwischen Onset-Temperatur und T₁₀₀ von 0,1 K⁻¹ oder mehr.

Blähgraphit-Typen, die im Rahmen der vorliegenden Erfindung eingesetzt werden können, besitzen vorzugsweise eine Onset-Temperatur in einem Bereich von 140 bis 180 °C, vorzugsweise in einem Bereich von 140 bis 160 °C. Blähgraphite mit interkalierter Schwefelsäure weisen, wie weiter oben beschrieben, üblicherweise eine Onset-Temperatur von etwa 200 °C auf und sind daher für die Zwecke der vorliegenden Erfindung und vor allem für ein frühes bzw. schnelles Aufschäumen bei niedrigen Temperaturen oft weniger bevorzugt. Blähgraphite, die jedoch auf sogenannter modifizierter Schwefelsäure als interkaliertem Reagenz basieren, sind dagegen für die Zwecke der vorliegenden Erfindung besonders bevorzugt.

Unter modifizierter Schwefelsäure sind im Rahmen des vorliegenden Textes zum Beispiel Schwefelsäure enthaltende Mischungen zu verstehen, die neben dem zu interkalierenden Reagenz (Schwefelsäure) spezielle Beimischungen (z.B. spezielle Oxidationsmittel) enthalten, die bei der Herstellung intumeszierender Blähgraphite verwendet werden, um die Expansionseigenschaften des entsprechenden Blähgraphits zu beeinflussen. Bevorzugte Beimischungen sind u.a. Kaliumpermanganat und Wasserstoffperoxid.

Alternativ können übliche Blähgraphite mit Schwefelsäure als interkaliertem Reagenz nach dem Interkalieren der Säure entsprechend den gewünschten Expansionseigenschaften, insbesondere entsprechend der gewünschten Onset-Temperatur, modifiziert werden, beispielsweise durch Waschen der Schwefelsäure-Graphitpartikel mit einer wässrigen Waschflüssigkeit, die Verbindungen enthält, welche die Expansionseigenschaften des Blähgraphits modifizieren (vergleiche hierzu beispielsweise DE 102 56 963 A1). Solche modifizierte Blähgraphite oder Blähgraphite, die auf sogenannter modifizierter Schwefelsäure als interkaliertem Reagenz basieren, weisen vorzugsweise eine Onset-Temperatur im Bereich von 140 bis 180 °C, besonders bevorzugt im Bereich von 140 bis 160 °C, auf und sind daher für die Zwecke der vorliegenden Erfindung besonders bevorzugt einzusetzen.

Weitere interkalierende Reagenzien, die als Alternative zu modifizierter Schwefelsäure dienen können, sind z.B. Essigsäure und Salpetersäure. Die Interkalation von Essigsäure oder Salpetersäure führt zu Blähgraphiten mit einer Onset-Temperatur von etwa 150 °C bis 160 °C. Diese beiden Säuren führen allerdings zu Expansionsparametern des resultierenden Blähgraphits, die den Erfordernissen reaktionsschneller Systeme im Einzelfall nicht genügen. Der Einsatz modifizierter Schwefelsäure ist daher besonders bevorzugt.

Der pH-Wert des einzusetzenden Blähgraphits ist vorzugsweise neutral; Säurereste können gegebenenfalls Werkzeuge und/oder Kunststoffe des Gesamtsystems beschädigen.

Beispielsweise hat sich der Blähgraphit-Typ AEM-C1 für die Zwecke der vorliegenden Erfindung als besonders geeignet erwiesen. Dieser Blähgraphit-Typ besitzt eine Onset-Temperatur von etwa 150 °C bis 160 °C. Die Parameter dieses Blähgraphit-Typs sind für die Zwecke der vorliegenden Erfindung besonders geeignet. Zudem ist es vorteilhaft, dass der besagte bevorzugte Blähgraphit-Typ einen Graphitteilchen-Durchmesser (Teilchengröße) von etwa 300 µm aufweist. Dieser Blähgraphit-Typ weist zudem, wie es auch allgemein im Rahmen der vorliegenden Erfindung bevorzugt ist, (modifizierte) Schwefelsäure als interkaliertes Reagenz auf. Die Reinheit dieses Graphits liegt bei mehr als 99 %, der Aschegehalt liegt bei etwa 0,9 %.

Eine bevorzugte Ausführungsform der vorhergehend beschriebenen erfindungsgemäßen zeichnet sich dadurch aus, dass der Blähgraphit sich ab einer Temperatur von 120 °C bis 250 °C beginnt auszudehnen.

Eine bevorzugte Ausführungsform der vorhergehend beschriebenen erfindungsgemäßen zeichnet sich dadurch aus, dass 80 % (Gew.) der Teilchen des Blähgraphits eine Teilchengröße von 75 bis 800 µm aufweisen.

Eine bevorzugte Ausführungsform der vorhergehend beschriebenen erfindungsgemäßen zeichnet sich dadurch aus, dass der Blähgraphit ein Gemisch aus mindestens zwei Sorten Blähgraphit mit unterschiedlichen Eigenschaften ist. In dieser Ausführungsform der Erfindung kann der Blähgraphit z.B. ein Gemisch aus Blähgraphit I und Blähgraphit II sein, wobei sich der Blähgraphit I ab einer Temperatur von 160 - 180 °C und der Blähgraphit II ab einer Temperatur von 120 - 155 °C beginnt auszudehnen.

Ein anderer maßgeblicher Bestandteil der erfindungsgemäßen Zusammensetzungen ist das Flammschutzmittel. Ein Flammschutzmittel im Sinne der vorliegenden Erfindung ist eine Verbindung, wie sie in der DIN ISO 1043-4 (Flammschutzmittel für Kunststoffe) charakterisiert wird. Obwohl Blähgraphit auch als Flammschutzmittel charakterisiert werden kann, ist dieser Verbindungstyp nicht bloß als Flammschutzmittel, sondern zusätzlich auch mit den für die Zwecke der vorliegenden Erfindung beschriebenen Eigenschaften, zu verstehen.

Das Flammschutzmittel als Bestandteil einer erfindungsgemäßen Zusammensetzung oder Brandschutzmischung bzw. eines erfindungsgemäßen intumeszierenden Brandschutzartikels besteht z.B. aus einem oder mehreren Flammschutzmitteln ausgewählt aus der Gruppe bestehend aus: phosphathaltige Flammschutzmittel, halogenhaltige Flammschutzmittel, mineralische Flammschutzmittel, stickstoffhaltige Flammschutzmittel, borhaltige Flammschutzmittel und Schichtsilikate auf Basis von Aluminiumsilikat-Tonmineralien. Die genannten Flammschutzmittel hemmen bzw. verhindern im Brandfall ein Abbrennen des polymeren Matrixmaterials. Ohne entsprechende Flammschutzmittel kann sich das Matrixmaterial leichter entzünden und abbrennen. Dadurch besteht die Gefahr, dass das Feuer aufgrund des nicht ausreichend geschützten Matrixmaterials durch die sich gebildete Dämm- bzw. Intumeszenzschicht hindurchwandern kann, da in dieser brennbare Komponenten (Kunststoff) in größerer Menge enthalten sind. Zudem kann der Brandherd weiter mit Sauerstoff versorgt werden, da durch die "undichte", geblähte Dämmschicht Luft an das Matrixmaterial herankommen kann. Dies kann zum Durchbrennen der Dämmschicht führen.

Es ist daher erfindungsgemäß vorgesehen, die entsprechende Brandschutzmischung bzw. einen entsprechenden intumeszierenden Brandschutzartikel mit einem oder mehreren der oben erwähnten Flammschutzmittel zu versehen.

Das eine oder die mehreren Flammschutzmittel können z.B. ausgewählt werden aus der Gruppe der
a) phosphor- bzw. phospathaltigen Flammschutzmittel, insbesondere Phosphatester, Phosphate, Phosphonate, Phosphinate und Ammoniumpolyphosphate,
b) halogenhaltigen Flammschutzmittel, insbesondere bromhaltige Flammschutzmittel, insbesondere bromierte Phosphorsäureester, (cyclo)aliphatische Bromverbindungen (z.B. Hexabromcyclododecan (HBCD)) und aromatische Bromverbindungen (z.B. polybromierte Diphenylether (PBDEs), Tetrabrombisphenal A (TBBPA), bromierte Polystyrole, bromierte Phenole und Tretrabromphthalsäureanhydrid),
c) mineralischen Flammschutzmittel, insbesondere Aluminiumhydroxid (ATH) und Magnesiumhydroxid (MDH),
d) stickstoffhaltigen Flammschutzmittel, insbesondere Melamin, Melaninderivate (z.B. Melaminpolyphosphat und Melamincyanurat) und Melaminhomologe,
e) borhaltigen Flammschutzmittel, insbesondere Borax und Zinkborat,
f) Schichtsilikate auf Basis von Aluminiumsilikat-Tonmineralien,.

In einer bevorzugten Ausführungsform der Erfindung ist das eingesetzte Flammschutzmittel jedoch ein phosphorhaltiges Flammschutzmittel, wobei das phosphorhaltige Flammschutzmittel vorzugsweise ausgewählt wird aus der Gruppe bestehend aus organischem Phosphat, rotem Phosphor, Ammoniumpolyphosphat, Ammoniumphosphat, Ammoniumdihydrogenphosphat und Mischungen derselben.

Es hat sich herausgestellt, dass für die Zwecke der vorliegenden Erfindung der Einsatz von Ammoniumpolyphosphat(en) besonders vorteilhaft ist. Ammoniumpolyphosphate besitzen beispielsweise gegenüber mineralischen Flammschutzmitteln wie Aluminiumhydroxid einen höheren Wirkungsgrad und können daher in geringeren Mengen eingesetzt werden. Zudem sind Ammoniumpolyphosphate selbst leicht intumeszierend und können so den Blähvorgang unterstützen. Ammoniumpolyphosphat wird im Brandfall in Ammoniakgas, welches die Flammen ersticken soll, und in Phosphorsäure, welche eine kohlenstoffhaltige Kruste bildet, die das Ausdampfen brennbarer Substanzen aus dem Matrixmaterial verhindert, gespalten. In eigenen Versuchen hat sich beispielsweise ein Flammschutzmittel auf Basis von Ammoniumpolyphosphaten der Firma Thor Chemie GmbH (AFLAMMAN TL1017) als besonders vorteilhaft erwiesen.

In bevorzugten erfindungsgemäßen Zusammensetzungen ist somit als Flammschutzmittel Ammonium Polyphosphat enthalten, vorzugsweise in einer Menge von 15 - 40 Gew.-% bezogen auf die Gesamtzusammensetzung.

In besonders bevorzugten erfindungsgemäßen Zusammensetzungen ist als Flammschutzmittel Ammonium Polyphosphat enthalten, dem Melamin zugemischt ist oder wobei das Ammonium Polyphosphat vorzugsweise mit Melamin beschichtet ist.

Bevorzugt enthalten erfindungsgemäße Zusammensetzungen das thermoplastische Elastomer auf Polypropylen-Basis in einer Menge von 30 - 40 Gew.-%, das Ammonium Polyphosphat in einer Menge von 25 - 30 Gew.-% und Blähgraphit in einer Menge von 20 - 40 Gew.-%, jeweils bezogen auf die Masse der Gesamtzusammensetzung. Eine bevorzugte Ausführungsform der erfindungsgemäßen Zusammensetzungen enthält das thermoplastische Elastomer auf Polypropylen-Basis in einer Menge von 35 - 40 Gew.-%, jeweils bezogen auf die Masse der Gesamtzusammensetzung. In einem Beispiel kann das Blähgraphit in einer Menge von etwa 35 Gew.-% bezogen auf die Gesamtzusammensetzung enthalten sein.

Neben dem Blähgraphit und dem Flammschutzmittel können die erfindungsgemäßen Zusammensetzungen weitere Zusatzstoffe (Additive) enthalten, die sich auf die Eigenschaften und das Verhalten der erfindungsgemäßen Zusammensetzungen bei deren Herstellung, deren Verwendung z.B. als Brandschutzmittel oder Weiterverarbeitung zu Brandschutzartikeln, insbesondere unter Einsatz von Extrusionsverfahren, und/oder im Brandfall positiv auswirken. In einer solchen Ausführungsform der erfindungsgemäßen Zusammensetzungen ist dann bevorzugt das thermoplastische Elastomer auf Polypropylen-Basis in einer Menge von 30 - 35 Gew.-%, bezogen auf die Masse der Gesamtzusammensetzung, enthalten.

Ein solcher besonders bevorzugter weiterer Bestandteil der erfindungsgemäßen Zusammensetzungen ist Pentaerythrit. Erfindungsgemäße Zusammensetzungen können das Pentaerythrit als weiteres Flammschutzmittel, insbesondere als Kohlenstofflieferant, vorzugsweise in einer Menge von 0,5 bis 30 Gew.-%, vorzugsweise in einer Menge von 5 bis 15 Gew.-%, besonders bevorzugt in einer Menge von 5 bis 8 Gew.-%, bezogen auf die Gesamtzusammensetzung, enthalten. Zweckmäßige Zusammensetzungen mit Pentaerythrit enthalten das thermoplastische Elastomer auf Polypropylen-Basis in einer Menge von 30 - 35 Gew.-%, bezogen auf die Masse der Gesamtzusammensetzung.

Pentaerythrit ist ein vorteilhafter Bestandteil in erfindungsgemäßen Zusammensetzungen, insbesodere solchen mit intumeszierenden Eigenschaften, und in einer Variante dieser Pentaerythrit-haltigen Zusammensetzungen, die mindestens ein phosphorhaltiges Flammschutzmittel und Blähgraphit enthalten, wird als Matrix ein Polypropylen basiertes thermoplastisches Elastomer mit einem Ethylen-Anteil von 5 bis 25 Gew.-% eingesetzt.

In einer weiteren Ausführungsform können die erfindungsgemäßen Zusammensetzungen zusätzlich ein oder mehrere weitere im Matrixmaterial eingebettete oder zugemischte, in dämmschichtbildenden thermoplastischen Elastomer-Zusammensetzungen übliche, Additive enthalten, die ausgewählt sind aus den Gruppen Treibmittel, anorganische, polymere Zusatzstoffe oder wärmeleitfähige Materialen. In solchen Zusammensetzungen können die zusätzlichen Additive in Mengen von 0,5 bis 30 Gew.-%, vorzugsweise in einer Menge von 5 bis 15 Gew.-%, besonders bevorzugt in einer Menge von 8 bis 12 Gew.-%, bezogen auf die Gesamtzusammensetzung zugesetzt sein.

In besonders bevorzugten Ausgestaltungen der Erfindung beträgt die im Matrixmaterial eingebettete Menge an Blähgraphit 20 - 40 Gew.-% bezogen auf die Masse der Gesamtzusammensetzung. Die Gesamtmenge der in das Matrixmaterial eingebetteten Bestandteile aus Blähgraphit, Flammschutzmittel und gegebenenfalls weiteren Additiven beträgt, jeweils bezogen auf die Masse der Gesamtzusammensetzung, besonders bevorzugt 60 - 70 Gew.-%. In besonders bevorzugten Ausgestaltungen der Erfindung umfasst das Flammschutzmittel mindestens ein phosphorhaltiges oder besteht aus mindestens einem phosphorhaltigen Flammschutzmittel.

Aus den beschriebenen erfindungsgemäßen Zusammensetzungen auf Basis eines thermoplastischen Elastomers auf Polypropylen-Basis mit Ethylen-Anteil lassen sich vorteilhafte dämmschichtbildende Baustoffe bzw. Baustoff-Artikel herstellen, die als charakteristischen Bestandteil eine solche erfindungsgemäße thermoplastische Elastomer-Zusammensetzung umfassen. Demgemäß weisen die erfindungsgemäßen dämmschichtbildenden Baustoffe bzw. Baustoff-Artikel dann auch die vorteilhaften Brandschutzeigenschaften der ihnen zugrundeliegenden erfindungsgemäßen thermoplastischen Elastomer-Zusammensetzungen auf. Die erfindungsgemäßen dämmschichtbildenden Baustoffe bzw. Baustoff-Artikel können dabei aus den erfindungsgemäßen thermoplastischen Elastomer-Zusammensetzungen allein geformt sein oder mit weiteren zur Herstellung von dämmschichtbildenden Baustoffe bzw. Baustoff-Artikel und/oder im Brandschutz üblicherweise eingesetzten Materialen und/oder Form- bzw. Bauteilen kombiniert sein.

Da die erfindungsgemäßen Zusammensetzungen auf Basis eines thermoplastischen Elastomers auf Polypropylen-Basis mit Ethylen-Anteil sich sehr gut extrudieren oder im Spritzgussverfahren verarbeiten lassen und einen hohen Feststoffanteil tolerieren bieten sich vielfältige Möglichkeiten, dämmschichtbildende, insbesondere intumeszierende, Baustoffe bzw. Baustoff-Artikel herzustellen. So können die vorteilhaften erfindungsgemäßen dämmschichtbildende, insbesondere intumeszierende, Baustoffe bzw. Baustoff-Artikel nicht nur bestehende Produkte des Standes der Technik (BBR, Rollit ISO, BSHN, BSHB usw.) ersetzen, sondern es kann auch sehr schnell und flexibel auf wechselnde und neue Anforderungen reagiert werden. Erfindungsgemäße dämmschichtbildende, insbesondere intumeszierende, Baustoffe bzw. Baustoff-Artikel können daher leicht in vielfältigen Formen hergestellt werden, beispielsweise in Form eines Bandes, eines Streifens und/oder einer Platte, und sie eignen sich für den Einsatz auf vielfältigen Gebieten, wie z.B. das Einbringen in Türzargen von Brandschutztüren, Betonfugenbänder, Fensterabschottung, Frachtraumabschottung von Flugzeugen und ggf. anderen Transportmitteln wie Schiffen, Lüftungsklappen, Kabeldurchführungen und Schienensysteme.

Bevorzugt betreffen die erfindungsgemäßen dämmschichtbildenden, insbesondere intumeszierenden, Baustoffe bzw. Baustoff-Artikel alle Anwendungsgebiete, wo brandschutztechnische Nachweise erforderlich sind und lassen sich hier sehr flexibel und sicher in dämmschichtbildende Baustoffen bzw. Baustoffartikeln zur Erreichung von Feuerwiderständen in Bauteilen nach der jeweiligen Prüfnorm einsetzen und anpassen. Die Erfindung überwindet hier auch Nachteile des Standes der Technik, da vorbekannte Lösungen sich auf andere Kunststoffsysteme gestützt haben, die ihren Zersetzungspunkt oft bereits vor dem Schmelzpunkt erreicht hatten.

Die erfindungsgemäßen Zusammensetzungen auf Basis eines thermoplastischen Elastomers auf Polypropylen-Basis mit Ethylen-Anteil und die daraus herstellbaren erfindungsgemäßen dämmschichtbildende, insbesondere intumeszierende, Baustoffe bzw. Baustoff-Artikel können vorteilhaft für eine intumeszierende Dichtung verwendet werden, z.B. zur Abdichtung von Fugen und/oder Hohlräumen. Solche Fugen und/oder Hohlräume sind in Gebäuden häufig anzutreffen, insbesondere im Fenster- und Türbereich, zwischen Wänden und/oder Decken, in der Elektroinstallation, in Wand- und/oder Deckendurchbrüchen für Ver- und Entsorgungsrohre und/oder Kanälen für Kabel.

Die erfindungsgemäßen Zusammensetzungen auf Basis eines thermoplastischen Elastomers auf Polypropylen-Basis mit Ethylen-Anteil und die daraus herstellbaren erfindungsgemäßen dämmschichtbildende, insbesondere intumeszierende, Baustoffe bzw. Baustoff-Artikel können auch vorteilhaft bei aus brennbaren Materialien gefertigten Rohren, die sehr schnell verschlossen werden müssen, oder auch bei nicht brennbaren Rohren mit brennbarer Isolierung, die nachhaltig verschlossen werden müssen, eingesetzt werden. Die erfindungsgemäßen Zusammensetzungen sind auch für Kabelbandagen, Fugenbänder und Fugenabschottungen für Gebäudespalten und Türen sowie Türzargen sehr gut geeignet.

Da die erfindungsgemäßen thermoplastischen Elastomer-Zusammensetzungen sehr gut extrudierbar sind, lassen sich unter ihrer Verwendung in vorteilhafter Weise solche erfindungsgemäße thermoplastische Elastomer-Zusammensetzungen enthaltende dämmschichtbildende Baustoffartikel, insbesondere aber intumeszierende Baustoffartikel wie Brandschutzartikel herstellen. Solche Baustoffartikel können die erfindungsgemäßen thermoplastischen Elastomer-Zusammensetzungen in einer Menge von 10 bis 70 Gew.% des Gesamtgewichts des polypropylen-haltigen Volumens des Bauteils enthalten.

Die dämmschichtbildenden Baustoffe (-Artikel) lassen sich sowohl im Spritzgussverfahren als auch in Extrusionsverfahren aus den erfindungsgemäßen Zusammensetzungen herstellen. Die Erfindung betrifft in einer Ausgestaltung daher auch einen dämmschichtbildenden Baustoff (-Artikel), wobei der Baustoff durch ein Spritzgussverfahren herstellbar ist. Dem Fachmann ist die Verarbeitung von thermoplastischen Zusammensetzungen einschließlich thermoplastischer Elastomer-Zusammensetzungen im Spritzgussverfahren geläufig und im Rahmen der vorliegenden Erfindung kann jedes Spitzgussverfahren eingesetzt werden.

Wie bereits erwähnt, können die dämmschichtbildender Baustoffe bzw. Baustoff-Artikel gemäß der Erfindung durch ein Extrusionsverfahren, insbesondere auch ein formgebendes Extrusionsverfahren, vorzugsweise unter Verwendung einer nach dem "Fischflossenprinzip" oder "Kleiderbügelprinzip" arbeitenden Düse, aus der thermoplastischen Elastomer-Zusammensetzung hergestellt werden. In solchen erfindungsgemäßen dämmschichtbildenden Baustoffen bzw. Baustoff-Artikeln kann die erfindungsgemäße Zusammensetzung als Formkörper ausgebildet oder in ein Formteil eingebracht werden, wobei der Formkörper vorzugsweise eine Manschette oder die Zusammensetzung vorzugsweise in eine Manschette als Formteil eingebracht ist. Durch die Extrusion der erfindungsgemäßen thermoplastischen Zusammensetzungen auf Basis eines thermoplastischen Polypropylen-Elastomers mit Ethylen-Anteil wird in einer weiter bevorzugten Ausführungsform der Erfindung als dämmschichtbildender Baustoff bzw. Baustoff-Artikel zunächst als Baustoff bzw. Baustoffartikel ein flexibles Band hergestellt, vorzugsweise ein flexibles Band, das aufgewickelt (Wickelband) werden und/oder nachfolgend vollflächig oder teilflächig mit einem selbstklebenden Band und/oder Hart-PVC bzw. einer Aluminiumfolie auf einer oder mehreren Seiten kaschiert werden kann. Ist dem Baustoff bzw. Baustoffartikel (z.B. eine intumeszierende Dichtung so kann diese üblicherweise auch in Form von Rollen oder Streifen angeboten und verarbeitet werden.

Die Erfindung betrifft daher auch die Verwendung der erfindungsgemäßen Zusammensetzungen auf Basis eines thermoplastischen Polypropylen-Elastomers mit Ethylen-Anteil zur Herstellung der beschriebenen dämmschicht-bildenden Baustoffe bzw. Baustoffartikel, umfassend folgenden Schritt:
- Extrusion der einer oben beschriebenen, erfindungsgemäßen thermoplastischen Zusammensetzung auf Basis eines thermoplastischen Polypropylen-Elastomers mit Ethylen-Anteil, vorzugsweise unter Verwendung einer nach dem "Fischflossenprinzip" oder "Kleiderbügelprinzip" arbeitenden Düse,
um einem Formkörper, vorzugsweise ein (extrudiertes) Band, eine Platte, einen Streifen, eine Manschette oder ein Wickelband, zu bilden oder um die Zusammensetzung in ein Formteil, vorzugsweise in eine Manschette als Formteil, einzubringen.

In einem weiteren Aspekt betrifft die Erfindung auch die Verfahren zur Herstellung erfindungsgemäßer dämmschichtbildender Baustoffe bzw. Baustoff-Artikel unter Einsatz der beschriebenen erfindungsgemäßen Zusammensetzungen auf Basis eines thermoplastischen Polypropylen-Elastomers mit Ethylen-Anteil.

In einer Ausführungsform der erfindungsgemäßen Verfahren umfasst die Herstellung der erfindungsgemäßen dämmschichtbildenden Baustoffe bzw. Baustoff-Artikel die Schritte:
a) Zudosieren eines Polypropylen-basierten thermoplastischen Elastomers mit einem Ethylen-Anteil von 5 bis 25 Gew.-% in einen Extruder,
b) Aufschmelzen des Polypropylen-basierten thermoplastischen Elastomers,
c) Zudosieren eines Gemisches enthaltend Blähgraphit, ggf. Pentaerythrit und, vorzugsweise phosphorhaltiges, Flammschutzmittel, und
d) Direkte Extrusion der durch das Polymer gebundenen Brandschutzmasse durch eine Düse.

In diesen Verfahren können im Prinzip alle Extruder-Typen eingesetzt werden, Bevorzugt wird als Extruder im Schritt a) ein Doppelschnecken-Compoundier-Extruder eingesetzt werden, der vorzugsweise ein gleichlaufender Doppelschnecken-Compoundierextruder ist. Ein gegenläufiger Zweischneckenextruder kann auch eingesetzt werden. Einschneckenextruder sind auch geeignet. Bevorzugt wird in diesen Verfahren in Schritt d) eine Breitschlitzdüse verwendet.

Die Verarbeitungstemperaturen liegen in diesen Verfahren üblicherweise im Bereich von 100 °C bis 200 °C. Die Verarbeitungstemperatur in dem Extruder liegt vorzugsweise im Bereich 110 - 180 °C und besonders bevorzugt im Bereich 120 - 160 °C. In einem weiteren bevorzugten Verfahren wird die Verarbeitungstemperatur so gewählt, dass diese etwa 5 - 10 °C niedriger ist als die Temperatur, bei der der Blähgraphit beginnt sich auszudehnen. Demgemäß kann das verwendete Polypropylen-basierte thermoplastische Elastomer so gewählt werden, dass das Polymer bei der gewünschten Verarbeitungstemperatur gut verarbeitbar ist.

Die erfindungsgemäßen Zusammensetzungen auf Basis eines thermoplastischen Polypropylen-Elastomers mit Ethylen-Anteil, die erfindungsgemäß daraus herstellbaren beschriebenen dämmschicht-bildenden Baustoffe bzw. Baustoffartikel, können vorteilhaft im sogenannten vorbeugenden Brandschutz als intumeszierende Materialien verwendet werden. Intumeszierende Materialien beginnen sich im Brandfall - wie beschrieben - ab einer bestimmten Temperatur auszudehnen. Diese Materialien werden insbesondere für erhöhte Brandschutzansprüche überall dort eingesetzt, wo die Gefahr besteht, dass Feuer und/oder der durch einen Brand entstehende Rauch aus dem Brandraum austritt und sich ein Feuer so weiter verbreitet.

Die erfindungsgemäßen Zusammensetzungen auf Basis eines thermoplastischen Polypropylen-Elastomers mit Ethylen-Anteil und die erfindungsgemäßen dämmschichtbildenden Baustoffe bzw. Baustoffartikel sind als intumeszierende Materialien auch für den vorbeugenden Brandschutz an besonders kritischen Stellen geeignet, durch die sich Feuer und/oder Rauch verbreiten können. Das sind z.B. die Anschlussstellen der Massivbauelemente wie Fugen zwischen Wänden und/oder Decken, Spalten, Zwischenräume an Fensterrahmen und Fensterflügeln, Türrahmen oder Türblättern, Glasfalzräume in Verglasungen, Wand- bzw. Deckendurchbrüche für Ver- und Entsorgungsrohre und Kanäle für elektrische Kabel.

Da in Zusammensetzungen auf Basis eines thermoplastischen Polypropylen-Elastomers mit Ethylen-Anteil und den dämmschicht-bildenden Baustoffen bzw. Baustoffartikeln der vorliegenden Erfindung vorteilhafterweise kein PVC enthalten ist, entwickelt sich im Brandfall kein HCl-Gas.

Die Zusammensetzungen auf Basis eines thermoplastischen Polypropylen-Elastomers mit Ethylen-Anteil und die dämmschicht-bildenden Baustoffe bzw. Baustoffartikel der vorliegenden Erfindung weisen hervorragende mechanische Eigenschaften, wie hohe Zug- und Biegefestigkeit auf. Demgegenüber sind die Materialien des Standes der Technik auf der Basis von Polyethylen sehr steif und weisen folglich nicht die gewünschte Flexibilität auf. Eine Dichtung aus weichgemachtem PVC als Trägermaterial besitzt verglichen mit den Dichtungen der vorliegenden Erfindung auch keine so guten mechanischen Eigenschaften. Des Weiteren zeigen die Zusammensetzungen auf Basis eines thermoplastischen Polypropylen-Elastomers mit Ethylen-Anteil und die dämmschichtbildenden Baustoffe bzw. Baustoffartikel der vorliegenden Erfindung im Gegensatz zu PVC-basierten Materialien im Brandfall keine Schrumpfung vor Beginn der Expansion. Da in den Materialien der vorliegenden Erfindung vorzugsweise kein Weichmacher enthalten ist, tritt keine oder keine signifikante Alterung der Zusammensetzungen auf Basis eines thermoplastischen Polypropylen-Elastomers mit Ethylen-Anteil und der dämmschicht-bildenden Baustoffe bzw. Baustoffartikel der vorliegenden Erfindung auf. Des Weiteren können somit in der Umgebung der erfindungsgemäßen Materialien liegende andere Materialien nicht nachteilig durch aus der Dichtung migrierenden Weichmacher beeinflusst werden.

Die Zusammensetzungen auf Basis eines thermoplastischen Polypropylen-Elastomers mit Ethylen-Anteil und die dämmschicht-bildenden Baustoffe bzw. Baustoffartikel der vorliegenden Erfindung expandieren im Brandfall rasch und bilden einen stabilen, hitzeisolierenden Kohlenstoffschaum. Die erfindungsgemäßen Materialien sind ist frei von Fasern und Halogenen und daher umweltfreundlich und gesundheitlich unbedenklich. Im Brandfall entstehen keine korrosiven Gase wie z.B. HCl.

Die intumeszierenden Materialien der vorliegenden Erfindung haben ein vorteilhaftes Eigenschaftsprofil für den vorbeugenden Brandschutz. Es können Materialien bereitgestellt werden, die z.B. ab einer Temperatur von 130 °C oder einer niedrigeren Temperatur beginnen sich auszudehnen. Sie weisen im Brandfall ein schnelleres Ansprechverhalten als die Materialien des Standes der Technik auf. Die Dichtungen der vorliegenden Erfindung weisen bei einer Temperatur von 200 °C vorzugsweise eine Ausdehnung um das Achtfache der Ausgangsstärke auf, während die Materialien des Standes der Technik bei dieser Temperatur noch nicht begonnen haben, sich nennenswert auszudehnen. Dies ist insbesondere vorteilhaft für die Anwendung in Brandschutzverglasungen und Brandschutztüren, da der Falzraum oder der Türspalt im Brandfall sehr schnell durch den Kohlenstoffschaum der intumeszierenden Materialien der vorliegenden Erfindung ausgefüllt und zuverlässig abgedichtet wird. Dieses gilt auch für aus brennbaren Materialien gefertigte Rohre, die sehr schnell verschlossen werden müssen, oder auch für nicht brennbare Rohre mit brennbarer Isolierung, die nachhaltig verschlossen werden müssen. Mit den erfindungsgemäßen Zusammensetzungen auf Basis eines thermoplastischen Polypropylen-Elastomers mit Ethylen-Anteil lassen sich die Expansionsparameter der Brandschutzmischungen bzw. der Brandschutzartikel derart verbessern, dass es im Brandfall gelingt, auch bei niedrigeren Temperaturen und bei ungünstigen Bedingungen der Wärmeübertragung auf die Brandschutzmischung bzw. den intumeszierenden Brandschutzartikel Öffnungen in Wänden, Böden und/oder Decken, insbesondere auch größere Öffnungen, z. B. für dickwandigere Rohre mit großem Rohrquerschnitt, sicher abzudichten.

Der Kohlenstoffschaum der Materialien der vorliegenden Erfindung nach Intumeszens ist des Weiteren verglichen mit den Materialien des Standes der Technik mechanisch stabiler gegenüber Löschwasser, welches oft unter hohem Druck zum Löschen von z.B. Gebäuden eingesetzt wird. Somit wird auch während der Löschung eine sichere Abdichtung der Hohlräume durch die Materialien der vorliegenden Erfindung garantiert.

Nachfolgend wird die Erfindung anhand von Ausführungsbeispielen näher erläutert.

### Ausführungsbeispiel A:

In einer bevorzugten Ausführungsform wird in Schritt a) ein Polypropylen basierten thermoplastischen Elastomers mit einem Ethylen-Anteil von 10 - 20 Gew.-% verwendet. Vistamaxx von der Firma Exon Mobil wird als Polypropylen basiertes thermoplastisches Elastomer bevorzugt eingesetzt. Ein Blähgraphit AEM C1 mit einem Expansionsbeginn von 140 °C und ein phosphorhaltiges Flammschutzmittel und Pentaerythrit werden nachfolgend in Schritt c) in den Extruder zudosiert. Die Verarbeitungstemperatur des Extruders wird auf eine Temperatur zwischen 100 und 110 °C eingestellt und ein flexibles Band wird extrudiert. Dieses flexible Band kann aufgewickelt werden und/oder nachfolgend vollflächig oder teilflächig mit einem selbstklebenden Band und/oder Hart-PVC bzw einer Aluminiumfolie auf einer oder mehreren Seiten kaschiert werden. Üblicherweise wird die intumeszierende Dichtung in Form von Rollen oder Streifen angeboten und verarbeitet.

### Ausführungsbeispiel B:

In einer bevorzugten Ausführungsform wird in Schritt a) ein Gemisch von Polyurethan und einem Polypropylen basierten thermoplastischen Elastomers mit einem Ethylen - Anteil von 10-20 Gew.-% und einem Polyurethan-Anteil im PU-Elastomer-Blend von 10-25 Gew.-% verwendet. Vistamaxx von der Firma Exon Mobil wird als Polypropylen basiertes thermoplastisches Elastomer und Purmelt von der Firma Henkel wird als Polyurethankomponente bevorzugt eingesetzt. Ein Blähgraphit mit einem Expansionsbeginn von 140 °C und ein phosphorhaltiges Flammschutzmittel und Pentaerythrit werden nachfolgend in Schritt c) in den Extruder zudosiert. Die Verarbeitungstemperatur des Extruders wird auf eine Temperatur zwischen 100 und 110 °C eingestellt und ein flexibles Band wird extrudiert. Dieses flexible Band kann aufgewickelt werden und/oder nachfolgend vollflächig oder teilflächig mit einem selbstklebenden Band und/oder Hart-PVC bzw. einer Aluminiumfolie auf einer oder mehreren Seiten kaschiert werden. Üblicherweise wird die intumeszierende Dichtung in Form von Rollen oder Streifen angeboten und verarbeitet.

### Ausführungsbeispiel C:

### 1. Extrusion:

### Ermittlung einer Kunststoffmatrix:

Ausgehend von einer Recherche zum Stand der Technik wurden 5 unterschiedliche Kunststoffe in Testversuchen hergestellt worden und Testversuche mit jeder Kunststoffmatrix im Extruder durchgeführt. Nachfolgende %-Angaben sind Gew.-%, soweit nichts anderes angegeben ist.

### Erste Testversuche mit Kunststoffmatrix:

Erste Versuche wurden dafür genutzt um Temperaturen und Fördergeschwindigkeiten zu ermitteln. Nach Ermittlung der Grundlagen wurden dann Muster hergestellt, die einer Bewertung unterzogen wurden. Als Favorit ging das thermoplastische Vistamaxx PP Elastomer aus den Versuchen heraus, das in den nachfolgend beschriebenen Versuchsergebnissen im Vergleich zum Stand der Technik (Intusit Pro der Firma Doyma) dargestellt wird.

### 2. Fazit der Versuche:

a) Vistamaxx lässt sich mit einem Füllstoff von 75 % ohne Probleme anreichern und ist somit sehr gut geeignet. Füllgrade über 75 % sind möglich sorgen aber für ein brüchiges Band. Außerdem ist mit zunehmendem Feststoffanteil ein Absondern der Feststoffe in der Düse des Extruders zu beobachten.
b) Die Testergebnisse wie Blähdruck und Schaumhöhe weisen stabilere und nachhaltigere Werte auf, als das Intusit Pro und geben somit einen Hinweis auf positive Ergebnisse im Brandversuch. Die Stabilität ist dem Ammonium Polyphosphat und Pentaerythrit Anteil zuzuordnen.
c) Blähdruckkurven wurden erstellt. Zur Bestimmung der Eigenschaften eines Brandschutz-Materials werden Blähdrücke gemessen und in einem Diagramm als Kurve aufgezeichnet. Die Energiemenge entspricht dabei der Fläche (dem Integral) unterhalb der Blähdruckkurve. Die Energiemenge der Proben mit mehr als 60 % Füllstoffanteil ist ebenfalls mindestens 30 % höher als beim Intusit Pro, was ebenfalls einen Rückschluss auf gute Brandversuchsergebnisse zulässt.
d) Pentaerythrit hat eine Endotherme Reaktion, welches den Druckaufbau/Startreaktion des Materials verlangsamt bzw. verlangsamen kann. Bevorzugt kann hier mit einem niedrig siedenden Graphit gearbeitet werden, der schon bei ca. 100 °C bis 120 °C startet wenn das Material sich im Brandversuch als zu langsam erweist. Das könnte ein Ausgleich sein. Zu beachten sind hier die Verarbeitungstemperaturen des Extruders. Alternativ oder zusätzlich können gut wärmeleitende Materialien, wie z.B. Aluminium der Mischung beigefügt werden.
e) Außerdem war zu erkennen, das Pentaerythrit den Blähdruck begrenzt. bzw. mindert. Hier muss ein Mittelweg zwischen Standfestigkeit, Blähdruck und Geschwindigkeit in der Rezeptur eingestellt werden.
f) Die Schaumfestigkeit ist ab 60 % Feststoffanteil besser als beim Intusit Pro. Das kann auf zwei Gründe zurückzuführen sein:
   1. Das Expancell ruft durch seine Mikro-Explosionen eine Zerstörung des Schaumgefüges hervor.
   2. Das Ammonium-Polyphosphat/Pentaerythrit-Gemisch sorgt für eine nachhaltige Schaumfestigkeit bis hin zu hohen Temperaturen. Pentaerythrit ist im Intusit Pro nicht enthalten und das Ammonium Polyphosphat nur mit 14 % Gew.-Anteil.
g) Wirkung von Pentaerythrit auf die Standfestigkeit:
   Die bereits beschriebene Funktion wurde noch erweitert auf Ihre Standfestigkeit.
   Fazit: Die Erhöhung des Anteils sorgt für einen standfesteren Schaum. Außerdem kann begutachtet werden das gleichzeitig der Blähdruck abnimmt mit steigendem Pentaerythrit-Anteil.
h) Wirkung von Ammonium Polyphosphat auf die Standfestigkeit:
   Das Ammonium Polyphosphat (APP) rief in den Versuchen einen erhöhten Blähdruck hervor. Weiterhin nimmt die Schaumfestigkeit mit erhöhtem APP Anteil zu.
i) Bei der Auswahl geeigneter Düsen zum Extrudieren ist folgendes zu beachten: Ohne einem detaillierten hydraulischen Abgleich werden die Feststoffe an den äußeren Rand gedrängt und "frieren" ein. Das flüssige Kunststoffsystem fliest hauptsächlich in der Mitte. Dieser Vorgang verstärkt sich je mehr Feststoffanteil in einer Rezeptur vorliegt. Massiv wird das Auftreten ab ca. 70 % Feststoffanteil. Es ist daher anzuraten, eine Düse vom "Fischflossen Prinzip" oder "Kleiderbügel-Prinzip" einzusetzen.
j) Um Probleme im Brandversuch zu vermeiden, ist darauf zu achten, dass das Graphit und Flammschutzmittel sich nicht im Randbereich maximiert. Sonst kann es zu Problemen beim Verschluss kommen. Ohne Metallgehäuse könnten die Probleme mehr zu Tage treten als wenn das Material in einem Manschettengehäuse geprüft wird.

### 3. Versuche im Brandversuch:

### Probekörper für den Brandversuch:

a) Für Vorversuche soll das Material in Manschettengehäusen überprüft werden. Dort liegen umfassende Ergebnisse vor um einen direkten Vergleich ziehen zu können.
b) Einbau als Wickelband mit Rohren die bereits mit dem Intusit Pro geprüft worden. Hier allerdings müssen Muster mit Gewebe und ohne geprüft werden um einen direkten Vergleich erzeugen zu können.

### Auswahl der Rezepturen für einen Brandversuch:

a) Für die Testversuche wurden die unter 6. beschriebenen Vistamaxx-Rezepturen (A) und (B) hergestellt.
b) Die Probekörper sind nach technischen und wirtschaftlichen Gesichtspunkten ausgewählt worden.

### 4. Ergebnis Brandversuch:

Es wurden die unter 6. beschriebenen Vistamaxx-Rezepturen (A) und (B) geprüft. Die Rezepturen wurden in Manschettengehäusen (XS-Pro) eingebaut. Die Mengen an Brandschutzmaterial sind direkt vergleichbar mit der XS-Pro Manschette. Jede Mischung wurde an einem DN 160 und DN 110 Ostendorf HT Rohr getestet. Als Referenz diente die Rezeptur Penta Intu 3 welche auf Basis des Intusit Pro basiert.

Des Weiteren sind die beiden Rezepturen als Wickelbänder eingebaut und getestet worden.

### 5. Fazit:

### Einbau in Manschetten:

Der erfindungsgemäße Baustoff hat sich beim Einbau in Manschetten als hoch wirksam erwiesen. Wo die Rezeptur "Penta Intu 3" knapp bestanden hat (eingefallene Rohre auf der Außenseite), stehen die neuen erfindungsgemäßen Rezepturen sicher. Die Rohre sind beim erfindungsgemäßen Baustoff komplett intakt und zeigen keine kritischen Temperaturen. Die Rezeptur ist Durchweg für den Einsatz bei Europäischen Prüfungen in Manschetten geeignet.

### 6. Zusammenfassung und Schlussfolgerung:

Aus Sicht der Versuchstests sind besonders erfolgreiche Rezepturen bei folgenden Werten anzugeben:

**Vistamaxx (A):**

| | |
|---|---|
| Ammonium Polyphosphat (Melamin gecoatet) | : 25-30% Gew.-Anteil |
| Graphit AEM C1 | : 35% (evtl. etwas mehr) |
| Pentaerythrit | : 0% |
| Vistamaxx | 35% bis 40% (mind. 25, 30% Sicherer, Bruch) |

oder

**Vistamaxx (B):**

| | |
|---|---|
| Ammonium Polyphosphat (Melamin gecoatet) | : 25-30% Gew.-Anteil |
| Graphit AEM C1 | : 35% (evtl. etwas mehr) |
| Pentaerythrit | : 5-8% |
| Vistamaxx | : 30% bis 35% (mind. 25, 30% Sicherer, Bruch) |

Wie die Zusammensetzungen zeigen kann der Pentaerythrit-Anteil ggf. darin begrenzt werden. Beide Bestandteile, Ammonium Polyphosphat und Pentaerythrit, haben Ihre Wirkung alleine nachgewiesen und es gibt Synergieeffekte. Somit sollten bevorzugte Zusammensetzungen Anteile an Pentaerythrit enthalten, da es im Brandversuch ein hoch effizienter Kohlenstoff-Lieferant ist.

### 7. Weitere beispielhafte Ausgestaltungen der Erfindung:

**A.** Eine intumeszierende Dichtung, enthaltend mindestens ein Polypropylen basiertes thermoplastisches Elastomer mit einem Ethylen-Anteil von 5 - 25 Gew.-%, Pentaerythrit, mindestens ein phosphorhaltiges Flammschutzmittel sowie Pentaerythritol und Blähgraphit.
**B.** In einer bevorzugten Ausführungsform sind in der intumeszierenden Dichtung 10 - 70 Gew.-% des Polypropylen basierten thermoplastischen Elastomers enthalten. Vorzugsweise sind 10 - 50 Gew.-% und weiter bevorzugt 15 - 40 Gew.-% des Polypropylen basierten thermoplastischen Elastomers in der Dichtung enthalten.
**C.** Der Ethylen-Anteil in dem thermoplastischen Elastomer ist vorzugsweise 5 - 25 Gew.-%, weiter bevorzugt 8 - 25 Gew.-% und am meisten bevorzugt 10 - 20 Gew.-%.
**D.** In der intumeszierenden Dichtung der vorliegenden Erfindung sind vorzugsweise 5 - 70 Gew.-% des phosphorhaltigen Flammschutzmittels enthalten. In einer weiteren bevorzugten Ausführungsform sind 5 - 50 Gew.-% und weiter bevorzugt 10 - 40 Gew.-% des phosphorhaltigen Flammschutzmittels in der Dichtung enthalten. Das phosphorhaltige Flammschutzmittel kann vorzugsweise ausgewählt werden aus der Gruppe bestehend aus organischem Phosphat, roter Phosphor, Ammoniumpolyphosphat, Ammoniumphosphat, Ammoniumdihydrogenphosphat und Mischungen derselben.
**E.** In der intumeszierenden Dichtung sind vorzugsweise 2 - 80 Gew.-%, weiter bevorzugt 10 - 60 Gew-%, noch weiter bevorzugt 20 - 50 Gew.-% und am meisten bevorzugt 25 - 40 Gew.-% des Blähgraphits enthalten. Der Blähgraphit, der in der Dichtung vorhanden ist, zeichnet sich dadurch aus, dass er vorzugsweise ab einer Temperatur von 120 - 250 °C beginnt sich auszudehnen. Die Ausdehnungstemperatur ist vorzugsweise 120 °C - 250 °C und weiter bevorzugt 120 °C - 170 °C.
**F.** Vorzugsweise enthält die Dichtung 15 - 35 Gew.-% eines Polypropylen basierten thermoplastischen Elastomers mit einem Ethylen-Anteil von 10 - 20 Gew.-%, 28 - 38 Gew.-% Blähgraphit, wobei der Blähgraphit bei einer Temperatur von 120 - 250 °C beginnt sich auszudehnen.
**G.** In einer weiteren bevorzugten Ausführungsform enthält die Dichtung 35 Gew.-% eines Polypropylen basierten thermoplastischen Elastomers mit einem Ethylen-Anteil von 10 - 20 Gew.-%, 15 - 25 Gew.- % Ammoniumpolyphosphat und 5-15 Gew.-% Pentaerythrit und 33 - 38 Gew.-% Blähgraphit mit einer Ausdehnungstemperatur von 140 °C.
**H.** Die intumeszierende Dichtung der vorliegenden Erfindung weist bei einer Temperatur von 450 °C vorzugsweise eine freie Ausdehnung von mindestens dem 10- bis 25-fachen der Ausgangsstärke auf. In einer bevorzugten Ausführungsform besitzt die Dichtung bei einer Temperatur von 300 °C einen Expansionsdruck von 0,3 bis 1,3 N/mm².

## Patentansprüche

1. Zusammensetzung umfassend ein Matrixmaterial bestehend aus einem Polypropylen-basierten thermoplastischen Elastomer mit Ethylen-Anteil, wobei das Gewichtsverhältnis von Propylen zu Ethylen im Matrixmaterial im Bereich von 95:5 bis 75:25 beträgt, und jeweils eine im Matrixmaterial eingebettete Menge an Blähgraphit von 20 - 40 Gew.-% bezogen auf die Masse der Gesamtzusammensetzung und eine Menge mindestens eines, vorzugsweise phosphorhaltigen, Flammschutzmittels, und gegebenenfalls zusätzlich ein oder mehrere weitere im Matrixmaterial eingebettete oder zugemischte in dämmschichtbildenden thermoplastischen Elastomer-Zusammensetzungen übliche Additive.

2. Zusammensetzung nach Anspruch 1, wobei das thermoplastische Elastomer auf Polypropylen-Basis in einer Menge von wenigstens 25 Gew.-%, vorzugsweise wenigstens 30 Gew.-%, jeweils bezogen auf die Masse Gesamtzusammensetzung, enthalten ist.

3. Zusammensetzung nach einem der Ansprüche 1 bis 2, wobei das thermoplastische Elastomer auf Polypropylen-Basis in einer Menge von 20 - 80 Gew.-%, vorzugsweise in einer Menge von 25 - 50 Gew.-%, weiter bevorzugt in einer Menge von 25 - 40 Gew.-%, besonders bevorzugt in einer Menge von 30 - 40 Gew.-%, jeweils bezogen auf die Masse Gesamtzusammensetzung, enthalten ist.

4. Zusammensetzung nach einem der Ansprüche 1 bis 3, wobei die Gesamtmenge der in das Matrixmaterial eingebetteten Bestandteile aus Blähgraphit, Flammschutzmittel und gegebenenfalls weiteren Additiven, jeweils bezogen auf die Masse der Gesamtzusammensetzung 20 - 80 Gew.-%, vorzugsweise 60 - 70 Gew.-%, beträgt.

5. Zusammensetzung nach einem der Ansprüche 1 bis 4, wobei als Flammschutzmittel Ammonium Polyphosphat, vorzugsweise in einer Menge von 15 - 40 Gew.-% bezogen auf die Masse der Gesamtzusammensetzung, enthalten ist.

6. Zusammensetzung nach einem der Ansprüche 1 bis 5, wobei als Flammschutzmittel Ammonium Polyphosphat enthalten ist, dem Melamin zugemischt ist und/oder wobei das Ammonium Polyphosphat mit Melamin beschichtet ist.

7. Zusammensetzung nach einem der Ansprüche 1 bis 4, wobei das Blähgraphit in einer Menge von 30 - 40 Gew.-%, weiter bevorzugt von 33 - 37 Gew.-%, jeweils bezogen auf die Masse der Gesamtzusammensetzung enthalten ist.

8. Zusammensetzung nach einem der Ansprüche 1 bis 7, worin das Blähgraphit ein Graphit enthaltend Schwefelsäure ist, vorzugsweise ein Blähgraphit weiterhin charakterisiert durch wenigstens einen der folgenden Parameter: Plättchengröße 200 µm - 500 µm; interkalierte Schwefelsäure; Aschegehalt: < 5 %, bevorzugt < 3 %; Graphitgehalt: 95 - 99 %; Expansionsvolumen: 200 - 500 ml/g; pH-Wert: neutral.

9. Zusammensetzung nach einem der Ansprüche 1 bis 8, wobei die Zusammensetzung das thermoplastische Elastomer auf Polypropylen-Basis in einer Menge von 30 - 40 Gew.-%, das Ammonium Polyphosphat in einer Menge von 25 - 30 Gew.-% und das Blähgraphit in einer Menge von 20 - 40 Gew.-%, jeweils bezogen auf die Masse der Gesamtzusammensetzung, enthält.

10. Zusammensetzung nach einem der Ansprüche 1 bis 4, wobei als weiteres Flammschutzmittel Pentaerythrit in einer Menge von 0,5 bis 30 Gew.-%, vorzugsweise in einer Menge von 5 bis 15 Gew.-%, besonders bevorzugt in einer Menge von 5 bis 8 Gew.-%, bezogen auf die Gesamtzusammensetzung, enthalten ist.

11. Dämmschichtbildender Baustoff (-Artikel) umfassend eine thermoplastische Elastomer-Zusammensetzung nach einem der Ansprüche 1 bis 10, vorzugsweise wobei der Baustoff durch ein Spritzgussverfahren herstellbar ist.

12. Dämmschichtbildender Baustoff (-Artikel) nach Anspruch 11, wobei der Baustoff durch ein Extrusionsverfahren, vorzugsweise ein formgebendes Extrusionsverfahren, besonders vorzugsweise unter Verwendung einer nach dem "Fischflossenprinzip" oder "Kleiderbügelprinzip" arbeitenden Düse, aus der thermoplastischen Elastomer-Zusammensetzung herstellbar ist.

13. Dämmschichtbildender Baustoff(-Artikel) nach einem der Ansprüche 11 bis 12, wobei die thermoplastische Elastomer-Zusammensetzung als Formkörper ausgebildet oder in ein Formteil eingebracht ist, wobei vorzugsweise der Formkörper, ein Band, ein Streifen, eine Platte, eine Manschette oder die Zusammensetzung in ein Formteil, vorzugsweise in eine Manschette als Formteil, eingebracht ist.

14. Dämmschichtbildender Baustoff (-Artikel) nach einem der Ansprüche 11 bis 12, wobei der aus der thermoplastischen Elastomer-Zusammensetzung hergestellte Baustoff ein flexibles Band ist, vorzugsweise ein flexibles Band, das aufgewickelt (Wickelband) werden und/oder nachfolgend vollflächig oder teilflächig mit einem selbstklebenden Band und/oder Hart-PVC bzw. einer Aluminiumfolie auf einer oder mehreren Seiten kaschiert werden kann.

15. Verwendung einer thermoplastischen Elastomer-Zusammensetzung nach einem der Ansprüche 1 bis 14 zur Herstellung eines Dämmschicht-bildenden Baustoffes, mit folgendem Schritt:
- Extrusion der einer thermoplastischen Elastomer-Zusammensetzung nach einem der Ansprüche 1 bis 14, vorzugsweise unter Verwendung einer nach dem "Fischflossenprinzip" oder "Kleiderbügelprinzip" arbeitenden Düse,
um einem Formkörper, vorzugsweise ein Band, einen Streifen, eine Platte, eine Manschette oder ein Wickelband zu bilden oder um die Zusammensetzung in ein eine in ein Formteil, vorzugsweise in eine Manschette als Formteil, einzubringen.

## Claims

1. A composition comprising a matrix material consisting of a polypropylene-based thermoplastic elastomer having an ethylene content, wherein the weight ratio of propylene to ethylene in the matrix material being in the range of from 95:5 to 75:25, and in each case an amount of expandable graphite of 20 - 40 % by weight, based on the matter of the total composition, and an amount of at least one, preferably phosphorus-containing, flame retarding agent, and optionally, embedded or admixed in the matrix material, of one or more further additives which are common in insulating layer-forming thermoplastic elastomer compositions.

2. A composition according to claim 1, wherein the thermoplastic elastomer on the basis of polypropylene is present in an amount of at least 25 % by weight, preferably at least 30 % by weight, in each case based on the matter of the total composition.

3. A composition according to any one of claims 1 to 2, wherein the thermoplastic elastomer on the basis of polypropylene is present in an amount of 20 - 80 % by weight, preferably in an amount of 25 - 50 % by weight, more preferably in an amount of 25 - 40 % by weight, particularly preferably in an amount of 30 % - 40 % by weight, in each case based on the matter of the total composition.

4. A composition according to any one of claims 1 to 3, wherein the total amount of the constituents, embedded in the matrix material, of expandable graphite, flame retarding agents and optionally other additives, in each case based on the matter of the total composition, is 20 - 80 % by weight, preferably 60 - 70 % by weight.

5. A composition according to any one of claims 1 to 4, wherein ammonium polyphosphate is present as the flame retarding agent, preferably in an amount of 15 - 40 % by weight, based on the matter of the total composition.

6. A composition according to any one of claims 1 to 5, wherein ammonium polyphosphate as the flame retarding agent is contained, to which melamine is admixed, and/or wherein the ammonium polyphosphate is coated with melamine.

7. A composition according to any one of claims 1 to 4, wherein the expandable graphite is present in an amount of 30 - 40 % by weight, more preferably 33 - 37 % by weight, in each case based on the matter of the total composition.

8. A composition according to any one of claims 1 to 7, wherein the expandable graphite is a graphite comprising sulfuric acid, preferably an expandable graphite further **characterized by** at least one of the following parameters: platelet size 200 µm - 500 µm; intercalated sulfuric acid; ash content: < 5 %, preferably < 3 %; graphite content: 95 - 99 %; expansion volume: 200 - 500 ml/g; pH value: neutral.

9. A composition according to any one of claims 1 to 8, wherein the composition comprises the thermoplastic elastomer based on polypropylene in an amount of 30 - 40 % by weight, the ammonium polyphosphate in an amount of 25 - 30 % by weight, and the expandable graphite in an amount of 20 - 40 % by weight, in each case based on the matter of the total composition.

10. A composition according to any one of claims 1 to 4, wherein as a further flame retarding agent, pentaerythritol is present in an amount of from 0.5 to 30 % by weight, preferably in an amount of from 5 to 15 % by weight, more preferably in an amount of 5 to 8 % by weight, based on the total composition.

11. An insulating layer-forming building material (article) comprising a thermoplastic elastomer composition according to any one of claims 1 to 10, preferably wherein the building material can be produced by an injection-moulding process.

12. An insulating layer-forming building material (article) according to claim 11, wherein the building material can be made from the thermoplastic elastomer composition by an extrusion process, preferably a shaping extrusion process, particularly preferably by using a nozzle operating according to the "fish fin principle" or "clothes hangers principle".

13. An insulating layer-forming building material (article) according to any one of claims 11 to 12, wherein the thermoplastic elastomer composition is formed as a moulded object or is incorporated into a moulded part, wherein preferably the moulded object, a tape, a strip, a plate, a cuff or the composition is incorporated into a moulded part, preferably into a cuff as a moulded part.

14. An insulating layer-forming building material (article) according to any one of claims 11 to 12, wherein the building material made from the thermoplastic elastomer composition is a flexible tape, preferably a flexible tape which can be wound up (wrapping tape) and/or subsequently can be laminated fully faced or partially faced on one or more sides with a self-adhesive tape and/or hard PVC or an aluminum foil, respectively.

15. Use of a thermoplastic elastomer composition according to any one of claims 1 to 14 for making an insulating layer-forming building material, comprising the following step:
- extrusion of a thermoplastic elastomer composition according to any one of claims 1 to 14, preferably using a nozzle operating according to the "fish fin principle" or "clothes hanger principle",
in order to form a moulded object, preferably a tape, a strip, a plate, a cuff or a wrapping tape, or to incorporate the composition into a moulded part, preferably into a cuff as a moulded part.

## Revendications

1. Composition comprenant un matériau de matrice constitué d'un élastomère thermoplastique à base de polypropylène comprenant une fraction d'éthylène, dans laquelle le rapport de poids entre le propylène et l'éthylène dans le matériau de matrice présente une valeur située dans la plage allant de 95:5 à 75:25, et respectivement une quantité, incorporée dans le matériau de matrice, de graphite gonflant de 20 - 40 % en poids par rapport à la masse de la composition totale et une quantité au moins d'un retardateur de flammes contenant de préférence du phosphore, et éventuellement en supplément un ou plusieurs autres additifs usuels incorporés dans le matériau de matrice ou ajoutés dans des compositions à base d'élastomère thermoplastiques formant une couche isolante.

2. Composition selon la revendication 1, dans laquelle l'élastomère thermoplastique à base de polypropylène est contenu en une quantité d'au moins 25 %, de préférence d'au moins 30 % en poids, respectivement par rapport à la masse de la composition totale.

3. Composition selon l'une quelconque des revendications 1 à 2, dans laquelle l'élastomère thermoplastique à base de polypropylène est contenu en une quantité de 20 - 80 % en poids, de préférence en une quantité de 25 - 50 % en poids, de manière davantage préférée en une quantité de 25 - 40 % en poids, de manière particulièrement préférée en une quantité de 30 - 40 % en poids, respectivement par rapport à la masse de la composition totale.

4. Composition selon l'une quelconque des revendications 1 à 3, dans laquelle la quantité totale des constituants incorporés dans le matériau de matrice composés de graphite gonflant, de retardateur de flammes et éventuellement d'autres additifs présente une valeur de 20 - 80 % en poids, de préférence de 60 - 70 % en poids respectivement par rapport à la masse de la composition totale.

5. Composition selon l'une quelconque des revendications 1 à 4, dans laquelle du polyphosphate d'ammonium est contenu en tant que retardateur de flammes de préférence en une quantité de 15 - 40 % en poids par rapport à la masse de la composition totale.

6. Composition selon l'une quelconque des revendications 1 à 5, dans laquelle du polyphosphate d'ammonium est contenu en tant que retardateur de flammes, auquel de la mélamine est ajoutée et/ou dans laquelle le polyphosphate d'ammonium est revêtu de mélamine.

7. Composition selon l'une quelconque des revendications 1 à 4, dans laquelle le graphite gonflant est contenu en une quantité de 30 - 40 % en poids, de manière davantage préférée de 33 - 37 % en poids, respectivement par rapport à la masse de la composition totale.

8. Composition selon l'une quelconque des revendications 1 à 7, dans laquelle le graphite gonflant est un graphite contenant de l'acide sulfurique, de préférence un graphite gonflant est par ailleurs **caractérisé par** au moins un des paramètres suivants : taille des plaquettes 200 µm - 500 µm ; de l'acide sulfurique intercalé ; une teneur en cendres : < 5 %, de manière préférée < 3 % ; une teneur en graphite : 95 - 99 % ; un volume d'expansion : 200 - 500 ml/g ; une valeur pH : neutre.

9. Composition selon l'une quelconque des revendications 1 à 8, dans laquelle la composition contient l'élastomère thermoplastique à base de polypropylène en une quantité de 30 - 40 % en poids, le polyphosphate d'ammonium en une quantité de 25 - 30 % en poids et le graphite gonflant en une quantité de 20 - 40 % en poids, respectivement par rapport à la masse de la composition totale.

10. Composition selon l'une quelconque des revendications 1 à 4, dans laquelle du pentaérythritol est contenu en tant qu'autre retardateur de flammes en une quantité allant de 0,5 à 30 % en poids, de préférence en une quantité allant de 5 à 15 % en poids, de manière particulièrement préférée en une quantité allant de 5 à 8 % en poids, par rapport à la composition totale.

11. (Article en) matériau de construction formant une couche isolante comprenant une composition élastomère thermoplastique selon l'une quelconque des revendications 1 à 10, de préférence dans lequel le matériau de construction peut être fabriqué par un procédé de moulage par injection.

12. (Article en) matériau de construction formant une couche isolante selon la revendication 11, dans lequel le matériau de construction peut être fabriqué à partir de la composition élastomère thermoplastique par un procédé d'extrusion, de préférence par un procédé d'extrusion de mise en forme, de préférence en particulier en utilisant une buse fonctionnant selon le « principe de nageoire » ou le « principe de cintre ».

13. (Article en) matériau de construction formant une couche isolante selon l'une quelconque des revendications 11 à 12, dans lequel la composition élastomère thermoplastique est réalisée sous la forme d'un corps moulé ou est introduite dans une pièce moulée, dans lequel de préférence le corps moulé, une bande, un ruban, une plaque, une manchette ou la composition sont introduits dans une pièce moulée, de préférence dans une manchette en tant que pièce moulée.

14. (Article en) matériau de construction formant une couche isolante selon l'une quelconque des revendications 11 à 12, dans lequel le matériau de construction fabriqué à partir de la composition élastomère thermoplastique est une bande flexible, de préférence une bande flexible qui peut être enroulée (bande d'enroulement) et/ou qui peut être doublée par la suite, sur toute la surface ou sur une surface partielle, d'une bande autoadhésive et/ou de PVC dur ou d'un film d'aluminium sur un ou plusieurs côtés.

15. Utilisation d'une composition élastomère thermoplastique selon l'une quelconque des revendications 1 à 14 servant à fabriquer un matériau de construction formant une couche isolante, comprenant l'étape suivante :
- l'extrusion d'une composition élastomère thermoplastique selon l'une quelconque des revendications 1 à 14, de préférence en utilisant une buse fonctionnant selon le « principe de nageoire » ou le « principe de cintre »,
afin de former un corps moulé, de préférence une bande, un ruban, une plaque, une manchette ou une bande d'enroulement ou afin d'introduire la composition dans une pièce moulée, de préférence dans une manchette en tant que pièce moulée.
